(19)

Europäisches Patentamt

European Patent Office

Office européen des brevets

(11) **EP 4 518 294 A1**

(12) **EUROPEAN PATENT APPLICATION**
published in accordance with Art. 153(4) EPC

(43) Date of publication:
**05.03.2025 Bulletin 2025/10**

(21) Application number: **23870375.5**

(22) Date of filing: **14.09.2023**

(51) International Patent Classification (IPC):
**H04L 67/51** (2022.01)

(52) Cooperative Patent Classification (CPC):
**G07B 15/02; H04L 67/51; H04L 67/52**

(86) International application number:
**PCT/CN2023/118897**

(87) International publication number:
**WO 2024/067141 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022 CN 202211194300**

(71) Applicant: **Huawei Technologies Co., Ltd.**
**Shenzhen, Guangdong 518129 (CN)**

(72) Inventors:
- **CHEN, Wei**
  **Shenzhen, Guangdong 518129 (CN)**
- **ZHAO, An**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR PROVIDING SERVICE AND ELECTRONIC DEVICE**

(57) This application provides a service providing method and an electronic device. The method includes: when determining that a user walks into a first underground parking lot, sending a service obtaining request to a server, where the service obtaining request is used to request to obtain a service associated with an event that the user walks into the first underground parking lot, and the electronic device is associated with the user; receiving a target service from the server, where the target service is used to determine a location of a vehicle in the first underground parking lot and/or pay a fee for parking in the first underground parking lot, and the vehicle is associated with the user; and displaying the target service. According to the method, the electronic device may automatically recommend a service related to an underground parking lot to the user based on an event performed by the user in an area in which the underground parking lot is located, so that the user can easily, quickly, and efficiently use the service related to the underground parking lot. This can improve convenience, practicability, and efficiency of a process of using the service related to the underground parking lot.

When determining that a user walks into a first underground parking lot, an electronic device sends a service obtaining request to a server, where the service obtaining request is used to request to obtain a service associated with an event that the user walks into the first underground parking lot, and the electronic device is associated with the user — S1601

The electronic device receives a target service from the server, where the target service is used to determine a location of a vehicle in the first underground parking lot and/or pay a fee for parking in the first underground parking lot, and the vehicle is associated with the user — S1602

The electronic device displays the target service — S1603

FIG. 16

## Description

## CROSS-REFERENCE TO RELATED APPLICATIONS

This application claims priority to Chinese Patent Application No. 202211194300.9, filed with the China National Intellectual Property Administration on September 28, 2022 and entitled "SERVICE PROVIDING METHOD AND ELECTRONIC DEVICE", which is incorporated herein by reference in its entirety.

## TECHNICAL FIELD

This application relates to the field of electronic device technologies, and in particular, to a service providing method and an electronic device.

## BACKGROUND

Currently, when a user uses a service (for example, a one-tap vehicle finding service or a one-tap payment service) related to an underground parking lot in an electronic device, the user usually needs to first download an application (application, APP) corresponding to the underground parking lot, and then select a corresponding service from the app for use. However, apps corresponding to different underground parking lots may be different. Therefore, in this manner, the user may need to download and install a large quantity of apps, and use services provided by different apps in different underground parking lots, resulting in high complexity of using the services by the user and low efficiency and practicability.

Currently, the user may alternatively actively find a specific QR code set in an underground parking lot, and scan the code to use a corresponding service. In this manner, the user may spend much time searching for the set QR code in the underground parking lot, resulting in low convenience and low practicability.

In conclusion, a current process of using a service related to an underground parking lot is cumbersome, and convenience, practicability, and use efficiency are low.

## SUMMARY

This application provides a service providing method and an electronic device, to automatically recommend a service related to an underground parking lot to a user based on an event performed by the user in an area in which the underground parking lot is located, so that the user can easily, quickly, and efficiently use the service related to the underground parking lot. This can improve convenience, practicability, and efficiency of a process of using the service related to the underground parking lot.

According to a first aspect, an embodiment of this application provides a service providing method, applied to an electronic device. The method includes: when determining that a user walks into a first underground parking lot, sending a service obtaining request to a server, where the service obtaining request is used to request to obtain a service associated with an event that the user walks into the first underground parking lot, and the electronic device is associated with the user; receiving a target service from the server, where the target service is used to determine a location of a vehicle in the first underground parking lot and/or pay a fee for parking in the first underground parking lot, and the vehicle is associated with the user; and displaying the target service.

In this method, when detecting that the user walks into an underground parking lot, the electronic device may obtain a service associated with an event from the server, and actively recommend the obtained service to the user. In this case, the user can directly use the corresponding service after entering the underground parking lot, and the user does not need to manually search for the service. In this way, the user easily and efficiently uses the service related to the underground parking lot. This can improve convenience, practicability, and efficiency of a process of using the service related to the underground parking lot.

In a possible design, the service obtaining request carries first scenario indication information and parking lot indication information, where the first scenario indication information indicates an event that the user walks into an underground parking lot, and the parking lot indication information indicates the first underground parking lot; or the service obtaining request carries second scenario indication information, and the second scenario indication information indicates the event that the user walks into the first underground parking lot.

In this method, a service that relates to an underground parking lot and that is to be used by the user is related to a real-time event in one aspect, and is related to a specific underground parking lot in another aspect. Therefore, the electronic device may obtain an associated service from the server based on an occurred event and an underground parking lot in which the electronic device is located, to recommend a proper service to the user more accurately.

In a possible design, the displaying the target service includes: displaying service indication information that indicates the target service; or displaying a service interface of the target service.

In this method, the electronic device may display the service according to a method for displaying the service indication information of the service. The service indication information may be information having a small information amount or a small data volume or occupying a small area, for example, a service icon. This can reduce impact on displayed content when the service is displayed. Alternatively, the electronic device may directly display the service interface of the service, so that the user can use the service easily. According to the method, a manner of displaying the service by the electronic device is flexible, and the manner may be selected according to a user requirement or an actual scenario requirement.

In a possible design, after the displaying service indication information that indicates the target service, the method further includes: in response to an operation performed on the service indication information, displaying the service interface of the target service.

In this method, the electronic device displays the service interface only after receiving a user instruction. The service interface can be displayed according to the user requirement. This improves user experience.

In a possible design, the target service includes a first service and/or a second service. The first service is used to determine the location of the vehicle in the first underground parking lot, and the second service is used to pay the fee for parking in the first underground parking lot. The displaying the target service includes: displaying first information that indicates the first service and/or second information that indicates the second service; or displaying a display interface of the first service and/or the second service.

In this method, the electronic device may recommend a single service to the user, or may recommend a plurality of services with different functions to the user. A manner of displaying the service by the electronic device may be displaying the service indication information of the service or directly displaying the service interface. Therefore, a manner a manner of providing the service by the electronic device is flexible, and the manner may be selected according to a user requirement or an actual scenario requirement.

In a possible design, after the displaying first information that indicates the first service and/or second information that indicates the second service, the method further includes: in response to a first operation performed on the first information, displaying a service interface of the first service; and/or in response to a second operation performed on the second information, displaying a service interface of the second service.

In this method, when providing a plurality of services, the electronic device may separately display service indication information of each service, so that the user can select, from the plurality of services by using the service indication information, a service that needs to be enabled, and then the electronic device displays a corresponding service interface based on a decision of the user. In this way, the service required by the user can be displayed in a targeted manner. This improves user experience.

In a possible design, the determining that a user walks into a first underground parking lot includes: determining a previous event; detecting whether the electronic device is located in an overground area or an underground area; and when determining that the electronic device changes from being located in the overground area to being located in the underground area, and the previous event is that the user walks out of the first underground parking lot, determining that the user walks into the first underground parking lot.

In this method, the event that the user walks out of the underground parking lot causes the user to change from being located in the underground area to being located in the overground area. If the user changes from being located in the overground area to being located in the underground area after the event, there is a high probability that the user walks into the underground parking lot. Therefore, the electronic device may accurately determine, based on the previous event and a status of a change between a ground location and an underground location of the user, the event that the user walks into the underground parking lot.

In a possible design, the determining that a user walks into a first underground parking lot includes: when determining that the user is in a non-riding state and is located in a specified target area, detecting whether the electronic device is located in an overground area or an underground area, where the target area includes the first underground parking lot; and when determining that the electronic device changes from being located in the overground area to being located in the underground area, determining that the user walks into the first underground parking lot.

In this method, the electronic device may accurately determine, based on the location of the user, the location of the underground parking lot, and a status of a change between a ground location and an underground location of the user, the event that the user walks into the underground parking lot.

In a possible design, the detecting whether the electronic device is located in an overground area or an underground area includes:

determining a wireless fidelity Wi-Fi fingerprint strength at a location of the electronic device, where the Wi-Fi fingerprint strength indicates Wi-Fi signal strength at the location of the electronic device, and the Wi-Fi fingerprint strength is positively correlated to the Wi-Fi signal strength at the location of the electronic device; and determining, based on the Wi-Fi fingerprint strength at the location of the electronic device, whether the electronic device is located in the overground area or the underground area.

In this method, because Wi-Fi devices laid in an underground parking lot are generally fewer than Wi-Fi devices laid on the ground, a Wi-Fi signal strength in an underground area is generally greatly different from that in an overground area. Therefore, the electronic device may distinguish between the underground area and the overground area based on values of detected Wi-Fi signal strengths, to accurately identify the status of the change between the ground location and the underground location of the user.

In a possible design, the determining, based on the Wi-Fi fingerprint strength at the location of the electronic device, whether the electronic device is located in the overground area or the underground area includes: when the Wi-Fi fingerprint strength is greater than a specified strength threshold, determining that the electronic device is located in the overground area; or when the Wi-Fi fingerprint strength is less than or equal to a specified strength threshold, determining that the electronic device is located in the underground area.

In this method, the Wi-Fi signal strength in the underground area is generally lower than that in the overground area. Therefore, the overground area and the underground area may be distinguished based on this feature.

In a possible design, the determining a wireless fidelity Wi-Fi fingerprint strength at a location of the electronic device includes: detecting a Wi-Fi signal strength of at least one Wi-Fi device existing in an environment in which the electronic device is located; determining a reference Wi-Fi signal strength corresponding to the at least one Wi-Fi device, where a reference Wi-Fi signal strength corresponding to any Wi-Fi device is a maximum value in a first parameter value and a second parameter value, the first parameter value is a difference between a Wi-Fi signal strength of the Wi-Fi device and a specified signal strength value, the second parameter value is a zero value, and the specified signal strength value is used as a minimum Wi-Fi signal strength value in the environment in which the electronic device is located; and summing up the reference Wi-Fi signal strength corresponding to the at least one Wi-Fi device to obtain the Wi-Fi fingerprint strength.

In this method, the electronic device may represent, by using the Wi-Fi fingerprint strength, an overall Wi-Fi signal strength in the environment in which the electronic device is located. The signal strength of each Wi-Fi device detected by the electronic device in the environment in which the electronic device is located contributes to the overall Wi-Fi signal strength. Therefore, the Wi-Fi fingerprint strength can be accurately determined based on the signal strength of each Wi-Fi device in the environment in which the electronic device is located, to more accurately identify the underground area based on the Wi-Fi fingerprint strength.

According to a second aspect, this application provides an electronic device. The electronic device includes a display, a memory, and one or more processors. The memory is configured to store computer program code, and the computer program code includes computer instructions. When the computer instructions are executed by the one or more processors, the electronic device is enabled to perform the method according to any one of the first aspect or the possible designs of the first aspect.

According to a third aspect, this application further provides a computer-readable storage medium. The computer-readable storage medium includes a computer program. When the computer program is run on a computer, the computer is enabled to perform the method according to any one of the first aspect or the possible designs of the first aspect.

According to a fourth aspect, this application provides a computer program product. The computer program product includes a computer program or instructions. When the computer program or the instructions are run on a computer, the computer is enabled to perform the method according to any one of the first aspect or the possible designs of the first aspect.

According to a fifth aspect, this application provides a chip, including one or more processors and a communication interface. The one or more processors are configured to read instructions, to perform the method according to any one of the first aspect or the possible designs of the first aspect.

According to a sixth aspect, this application provides an apparatus, including units for performing the method according to any one of the first aspect or the possible designs of the first aspect.

For beneficial effects of the second aspect to the sixth aspect, refer to the descriptions of the beneficial effects of the first aspect. Details are not described herein again.

## BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3a is a diagram of an architecture of a detection system according to an embodiment of this application;
FIG. 3b is a diagram of an architecture of another detection system according to an embodiment of this application;
FIG. 4 is a diagram of a status of a user and/or a vehicle according to an embodiment of this application;
FIG. 5 is a diagram of a method for detecting that a user drives a vehicle into or out of an underground parking lot according to an embodiment of this application;
FIG. 6 is a diagram of a method for detecting that a user starts or stops a vehicle in an underground parking lot according to an embodiment of this application;
FIG. 7 is a diagram of a method for detecting that a user walks into or out of an underground parking lot according to an embodiment of this application;
FIG. 8 is an example diagram of a signal strength of a Wi-Fi device according to an embodiment of this application;
FIG. 9 is a diagram of a method for detecting that a user drives into or out of an underground parking lot according to an embodiment of this application;

FIG. 10 is a diagram of a method for detecting that a user starts or stops a vehicle in an underground parking lot according to an embodiment of this application;

FIG. 11 is a diagram of a service providing method according to an embodiment of this application;

FIG. 12 is an example diagram of a service display interface according to an embodiment of this application;

FIG. 13 is an example diagram of a service display interface according to an embodiment of this application;

FIG. 14a is an example diagram of a service display interface according to an embodiment of this application;

FIG. 14b is an example diagram of a service display interface according to an embodiment of this application;

FIG. 15 is a diagram of a service providing method according to an embodiment of this application;

FIG. 16 is a diagram of a service providing method according to an embodiment of this application; and

FIG. 17 is a diagram of a structure of an electronic device according to an embodiment of this application.

## DESCRIPTION OF EMBODIMENTS

To make objectives, technical solution, and advantages of embodiments of this application clearer, the following further describes embodiments of this application in detail with reference to the accompanying drawings. The terms "first" and "second" below in the descriptions of the embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.

For ease of understanding, descriptions about concepts related to this application are provided as examples for reference.

An electronic device may be a device having a wireless connection function. In some embodiments of this application, the electronic device may be a device having a display.

In some embodiments of this application, the electronic device may be a portable device, for example, a mobile phone, a tablet computer, a wearable device having a wireless communication function (for example, a watch, a bracelet, a helmet, or a headset), a vehicle-mounted terminal device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart television or a smart speaker), an intelligent automobile, an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a flight device (for example, an intelligent robot, a hot air balloon, an uncrewed aerial vehicle, or aircraft).

In some embodiments of this application, the electronic device may alternatively be a portable terminal device that further includes another function, for example, a personal digital assistant and/or a music playing function. An example embodiment of the portable terminal device includes but is not limited to a portable terminal device using iOS®, Android®, Microsoft®, or another operating system. Alternatively, the portable terminal device may be another portable terminal device, for example, a laptop (laptop) computer with a touch-sensitive surface (for example, a touch panel). It should be further understood that in some other embodiments of this application, the electronic device may alternatively be a desktop computer with a touch-sensitive surface (for example, a touch panel), instead of the portable terminal device.

It should be understood that in embodiments of this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following" or a similar expression thereof indicates any combination of these items, including a single item or any combination of a plurality of items. For example, at least one of a, b, or c may indicate: a, b, c, a and b, a and c, b and c, or a, b, and c, where a, b, and c may be singular or plural.

Currently, a solution, for example, positioning and vehicle finding in an underground parking lot, is implemented by a user by using a specific app (generally corresponding to a specific parking lot) to actively trigger a corresponding service. The user needs to download and install the specific application in advance to use a function of the application in the underground parking lot. There are many underground parking lots, and applications corresponding to different underground parking lots may be different. Therefore, in the foregoing solution, the user may need to download and install a large quantity of applications, and practicability is low. Currently, the user may alternatively actively find a specific QR code set in the underground parking lot and scan the code to trigger a corresponding service. This method also has low practicability, and user experience is poor.

In the foregoing two solutions, the user manually triggers a related service, and use efficiency is low. If the related service needs to be automatically provided to the user, statuses of the user and the vehicle in the underground parking lot need to be automatically identified.

For automatic identification of the statuses of the user and the vehicle in the underground parking lot, currently, a solution that may be used is to lay wireless devices (for example, a wireless base station, an access point (access point, AP), and a Bluetooth beacon) at an entrance and exit of the underground parking lot and inside the underground parking lot in advance. In addition, a fingerprint database including location fingerprints of different locations in the underground parking lot is constructed by manually collecting signals of the wireless devices. During actual detection, location fingerprints of the vehicle and the user (a handheld device) may be detected in real time and compared with those in the fingerprint database, to determine locations corresponding to the location fingerprints, namely, locations of the vehicle and the user (the handheld device). In this solution, accurate locations of the vehicle and the user can be provided, instead of only determining whether the vehicle and the user are in the parking lot. However, because a large quantity of wireless devices need to be laid in the underground parking lot, high additional device maintenance costs are caused. Therefore, efficiency and practicability of this solution are low.

For automatic identification of the statuses of the user and the vehicle in the underground parking lot, currently, another solution that may be used is to detect a strength change of a global positioning system (global positioning system, GPS) signal and a change of a driving status of the vehicle. In addition, whether the vehicle passes an entrance and exit of the underground parking lot is determined based on the strength change of the GPS signal and the change of the driving status of the vehicle. In this method, only a scenario in which the user drives the vehicle into or out of the underground parking lot can be detected. Therefore, scenarios that can be identified are limited, resulting in low practicability.

In view of the foregoing problems, embodiments of this application provide a service providing method and an electronic device, to accurately and comprehensively detect statuses that are of a user and a vehicle and that relate to an underground parking lot in a timely manner, and automatically provide a proper service based on the detected statuses, thereby improving practicability of a solution and user experience.

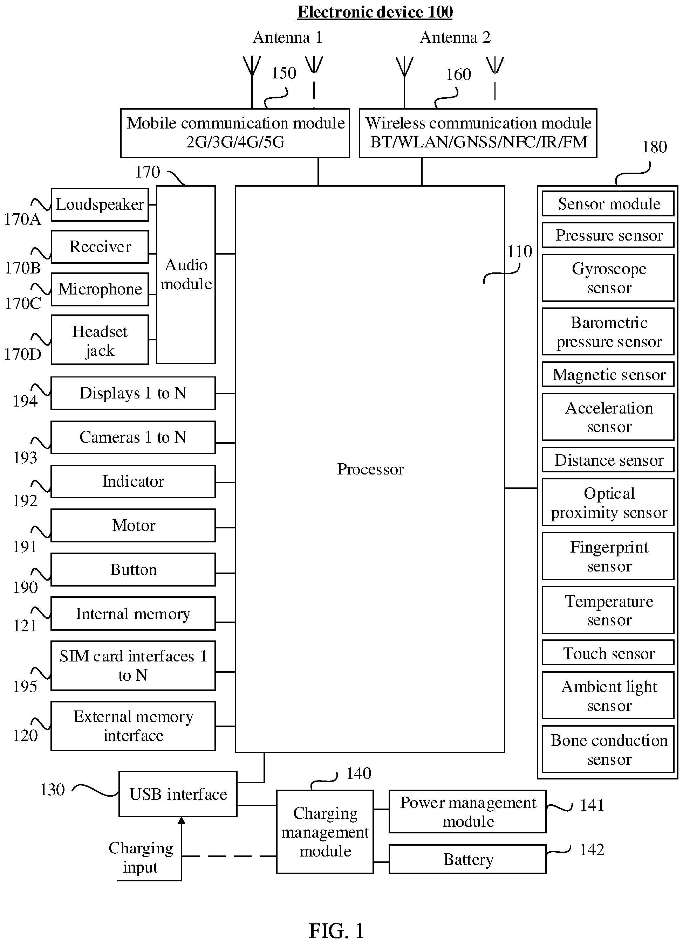

Refer to FIG. 1. The following first describes a structure of an electronic device to which a method provided in embodiments of this application is applicable.

As shown in FIG. 1, the electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display 194, an SIM card interface 195, and the like.

The sensor module 180 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or may combine two or more components, or may have different component configurations. Various components shown in FIG. 1 may be implemented by hardware that includes one or more signal processing and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

Execution of the service providing method provided in embodiments of this application may be controlled by the processor 110 or completed by invoking another component, for example, invoking a processing program in embodiments of this application stored in the internal memory 121, or invoking, by using the external memory interface 120, a processing program in embodiments of this application stored in a third-party device, to control the wireless communication module 160 to perform data communication with another device, to implement intelligence and convenience of the electronic device 100, thereby improving user experience. The processor 110 may include different components. For example, when a CPU and a GPU are integrated, the CPU and the GPU may cooperate to perform the service providing method provided in embodiments of this application. For example, in the service providing method, some algorithms are performed by the CPU, and the other algorithms are performed by the GPU, to achieve high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1. The display 194 may be configured to display information entered by a user or information provided to a user and various graphical user interfaces (graphical user interfaces, GUIs). For example, the display 194 may display a photo, a video, a web page, a file, or the like.

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element, for example, a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store code of an operating system and an application program (for example, a function of detecting a status of a user and/or a vehicle and a corresponding event and a function of providing a service that are provided in embodiments of this application), and the like. The data storage area may store data created during use of the electronic device 100.

The internal memory 121 may further store one or more computer programs corresponding to the algorithms in the solution provided in embodiments of this application. The one or more computer programs are stored in the internal memory 121 and are configured to be executed by the one or more processors 110. The one or more computer programs include instructions, and the instructions may be used to perform the steps in the following embodiments.

In addition, the internal memory 121 may include a high-speed random-access memory, or may include a nonvolatile memory, for example, at least one magnetic disk storage component, a flash memory component, or a universal flash storage (universal flash storage, UFS).

Certainly, code of the algorithms in the solution provided in embodiments of this application may be alternatively stored in the external memory. In this case, the processor 110 may run, through the external memory interface 120, the code of the solution algorithms stored in the external memory.

The sensor module 180 may include a gyroscope sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 form a touchscreen, which is also referred to as a "touch screen". The touch sensor is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor may alternatively be disposed on a surface of the electronic device 100, and is at a position different from that of the display 194.

For example, the display 194 of the electronic device 100 displays a home screen, and the home screen includes icons of a plurality of applications (for example, a camera application). The user taps an icon of the camera application on the home screen by using the touch sensor, to trigger the processor 110 to start the camera application and turn on the camera 193. The display 194 displays an interface of the camera application, for example, a viewfinder interface.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may further be multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same component. In embodiments of this application, the mobile communication module 150 may be further configured to exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio apparatus (which is not limited to the loudspeaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near-field communication (near-field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-transmitted signal from the processor 110, perform frequency modulation and amplification on the signal, and convert a processed signal into an electromagnetic wave for radiation through the antenna 2. In embodiments of this application, the wireless communication module 160 is configured to establish a connection to another electronic device to perform data exchange. Alternatively, the wireless communication module 160 may be configured to access an access point device, send a control instruction to another electronic device, or receive data sent by another electronic device.

In addition, the electronic device 100 may implement an audio function through the audio module 170, the loudspeaker 170A, the receiver 170B, the microphone 170C, the headset jack 170D, the application processor, and the like, for example, music playing and sound recording. The electronic device 100 may receive an input of the button 190, and generate a button signal input related to a user setting and function control of the electronic device 100. The electronic device 100 may generate a vibration prompt (for example, an incoming call vibration prompt) by using the motor 191. The indicator 192 of the electronic device 100 may be an indicator light, may be configured to indicate a charging status and a battery level change, or may be configured to indicate a message, a missed call, a notification, and the like. The SIM card interface 195 in the electronic device 100 is configured to connect to a SIM card. The SIM card may be inserted into the SIM card interface 195 or removed from the SIM card interface 195, to implement contact with or separation from the electronic device 100.

It should be understood that, during actual application, the electronic device 100 may include more or fewer components than those shown in FIG. 1. This is not limited in embodiments of this application. The electronic device 100 shown in the figure is merely an example, and the electronic device 100 may have more or fewer components than those shown in the figure, may combine two or more components, or may have different component configurations. The components shown in the figure may be implemented in hardware including one or more signal processing and/or application-specific integrated circuits, software, or a combination of hardware and software.

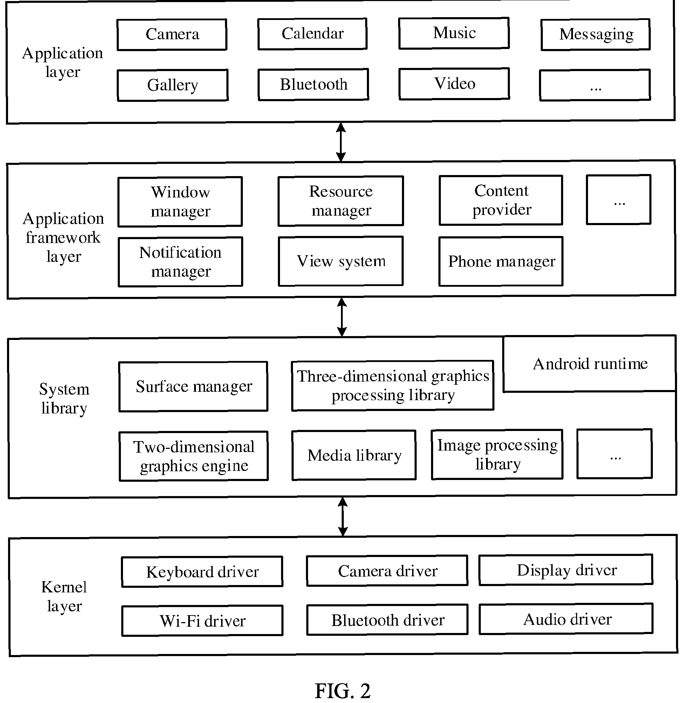

A software system of the electronic device 100 may use a layered architecture, an eventdriven architecture, a microkernel architecture, a micro service architecture, or a cloud architecture. In the layered architecture, software is divided into several layers. Each layer has a clear role and task. The layers communicate with each other through a software interface. For example, as shown in FIG. 2, the software architecture may be divided into four layers: an application layer, an application framework (framework, FWK) layer, a runtime and system library, and a Linux kernel layer from top to bottom.

The application layer is a top layer of an operating system and includes native applications of the operating system, such as Camera, Gallery, Calendar, Bluetooth, Music, Video, and Messaging. An application in embodiments of this application may be referred to as an app for short, and is a software program that can implement one or more specific functions. Usually, a plurality of applications such as a camera application, a mailbox application, and a smart home device control application may be installed on the electronic device. An application mentioned below may be a system application installed when the electronic device is delivered from the factory, or may be a third-party application downloaded by the user from a network or obtained by the user from another electronic device during use of the electronic device.

Certainly, a developer may compile an application and install the application at the layer. In a possible implementation, the application may be developed in a Java language, and is completed by invoking an application programming interface (Application Programming Interface, API) provided by the application framework layer. The developer may interact with a bottom layer (for example, a kernel layer) of the operating system through the application framework, to develop the application of the developer.

The application framework layer is an API and a programming framework of the application layer. The application framework layer may include some predefined functions. The application framework layer may include a window manager, a content provider, a view system, a phone manager, a resource manager, a notification manager, and the like.

The window manager is used to manage a window program. The window manager may obtain a size of the display, determine whether there is a status bar, perform screen locking, take a screenshot, and so on.

The content provider is used to store and obtain data, and enable the data to be accessed by an application. The data may include information such as a file (for example, a document, a video, an image, or an audio) and a text.

The view system includes visual controls, for example, controls that display content such as a text, a picture, and a document. The view system may be used to construct an application. An interface in a display window may include one or more views. For example, a display interface including an SMS message notification icon may include a text display view and an image display view.

The phone manager is used to provide a communication function of the electronic device. The notification manager enables an application to display notification information in a status bar, and may be used to convey a notification message. The notification manager may automatically disappear after a short stay, without requiring a user interaction.

The runtime includes a kernel library and a virtual machine. The runtime is responsible for scheduling and management of the system.

The kernel library of the system includes two parts: One part is a performance function that needs to be invoked in a Java language, and the other part is the kernel library of the system. The application layer and the application framework layer run on the virtual machine. Java is used as an example. The virtual machine executes Java files at the application layer and the application framework layer as binary files. The virtual machine is used to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), and a two-dimensional graphics engine (for example, SGL). The surface manager is used to manage a display subsystem and provide fusion of two-dimensional and three-dimensional graphics layers for a plurality of applications. The media library supports playback and recording in a plurality of commonly used audio and video formats, and static image files. The media library may support a plurality of audio and video encoding formats such as MPEG-4, H.564, MP3, AAC, AMR, JPG, and PNG. The three-dimensional graphics processing library is used to implement three-dimensional graphics drawing, image rendering, composition, layer processing, and the like. The two-dimensional graphics engine is a drawing engine for two-dimensional drawing.

The kernel (kernel) layer provides a core system service of the operating system. For example, security, memory management, process management, a network protocol stack, and a driver model are all implemented based on the kernel layer. The kernel layer is also used as an abstraction layer between hardware and a software stack. The layer has many drivers related to the electronic device, mainly including a display driver, a driver of a keyboard used as an input device, a camera driver, an audio driver, a Bluetooth driver, a Wi-Fi driver, and the like.

It should be understood that the function service described above is merely an example. During actual application, the electronic device may alternatively be divided into more or fewer function services based on other factors, or may be divided into functions of services in another manner, or may not be divided into function services, but works as a whole.

The solution provided in embodiments of this application may be applied to a scenario corresponding to a process of detecting that a user and/or a vehicle enters or leaves an underground parking lot. For example, the method may be applied to a scenario of detecting a process in which a user drives a vehicle into an underground parking lot, a user stops a vehicle in an underground parking lot, a user walks out of an underground parking lot, a user walks into an underground parking lot, a user starts a vehicle in an underground parking lot, a user drives a vehicle out of an underground parking lot, and so on. According to the method provided in embodiments of this application, different scenarios in an entire process in which the user drives the vehicle into or out of the underground parking lot can be separately detected, and detection efficiency is high.

The solutions provided in embodiments of this application may be implemented by a plurality of electronic devices through collaboration, or may be implemented in a single electronic device. The following provides brief descriptions.

Scenario 1: multi-device collaboration scenario

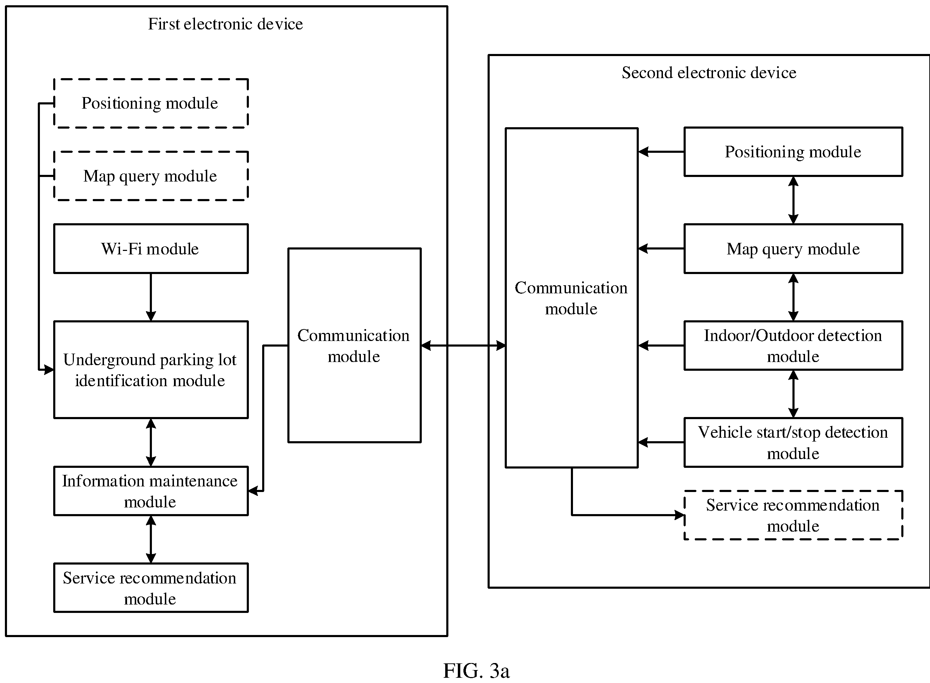

FIG. 3a is a diagram of an architecture of a detection system according to an embodiment of this application. As shown in FIG. 3a, the system includes at least a first electronic device and a second electronic device. The first electronic device may be an electronic device carried by the user, and the second electronic device may be a vehicle-mounted electronic device on a vehicle driven by the user. The first electronic device and the second electronic device may complete the solution provided in embodiments of this application through collaboration.

Specifically, the first electronic device may be configured to detect a status that the user leaves the underground parking lot (to a ground layer) after getting off the vehicle or enters the underground parking lot (from a ground layer). The first electronic device may include a communication module, a Wi-Fi module, an underground parking lot identification module, an information maintenance module, a service recommendation module, and the like. Optionally, the first electronic device may further include a positioning module, a map query module, and the like. The communication module may be used to communicate with the second electronic device. The Wi-Fi module may be used to detect a Wi-Fi fingerprint strength at a location of the first electronic device, and may determine, based on the Wi-Fi fingerprint strength, whether the location of the first electronic device is on the ground or underground. The underground parking lot identification module may be used to distinguish between the overground location and the underground location based on the Wi-Fi fingerprint strength detected by the Wi-Fi module, and determine, with reference to parking context information maintained by the information maintenance module, whether the user is located in the underground parking lot. The information maintenance module is used to manage and save the parking context information. The parking context information includes information about an event that the user and/or the vehicle are/is related to the underground parking lot. The event that the user and/or the vehicle are/is related to the underground parking lot may include at least some or all of the following events: The user drives the vehicle into the underground parking lot, the user stops the vehicle in the underground parking lot, the user walks out of the underground parking lot, the user walks into the underground parking lot, the user starts the vehicle in the underground parking lot, the user drives the vehicle out of the underground parking lot, and so on. Certainly, the event that the user and/or the vehicle are/is related to the underground parking lot may further include another event, and is not limited to some or all of the foregoing events. During actual application, the event that the user and/or the vehicle are/is related to the underground parking lot may alternatively be configured by the system based on an actual scenario, or may be set by the user. Optionally, the parking context information may further include information about a status that the user and/or the vehicle are/is related to the underground parking lot. The status that the user and/or the vehicle are/is related to the underground parking lot may include at least some or all of the following statuses: being located in the underground parking lot, being located out of the underground parking lot, being located in the underground parking lot before vehicle stop, being located in the underground parking lot after vehicle stop, being located out of the underground parking lot before vehicle stop, and being located out of the underground parking lot after vehicle stop. Certainly, the status that the user and/or the vehicle are/is related to the underground parking lot may further include another status, and is not limited to some or all of the foregoing statuses. During actual application, the status of the user and/or the vehicle may alternatively be configured by the system based on an actual scenario, or may be set by the user. With reference to an actual application scenario, each of the foregoing some or all statuses may be further divided into different statuses or the like. This is not specifically limited in embodiments of this application. The same applies to the event of the user and/or the vehicle. The service recommendation module is used to recommend a corresponding service to the user based on a current status or a corresponding event of the user and/or the vehicle. The positioning module is used to determine a location of the first electronic device, and a positioning manner used by the positioning module may be network positioning or the like. The map query module is used to query, based on the location determined by the positioning module and with reference to an obtained map, a point of interest (point of interest, POI) near the location, and further determine whether the first electronic device is located in a target area in which the underground parking lot may exist.

The second electronic device may be configured to detect statuses such as that the user drives the vehicle into the underground parking lot, that the user drives the vehicle out of the underground parking lot, that the user stops the vehicle in the underground parking lot, and that the user starts the vehicle in the underground parking lot, and may send a detection result to the first electronic device, so that the first electronic device obtains comprehensive status information of a user and/or a vehicle. The second electronic device may include a communication module, a positioning module, a map query module, an indoor/outdoor detection module, a vehicle start/stop detection module, and the like. The communication module may be used to communicate with the first electronic device. The positioning module is used to determine a location of the second electronic device, and a positioning manner used by the positioning module may be satellite positioning or the like. The map query module is used to query, based on the location determined by the positioning module and with reference to an obtained map, a POI near the location, and further determine whether the second electronic device is located in a target area in which the underground parking lot may exist, to distinguish between the underground parking lot and another obstruction. The target area may be an area of a specified type in which the underground parking lot (possibly) exists, for example, an area of a shopping mall, an office building, or a residence. The indoor/outdoor detection module may be used to determine, based on a detected satellite signal, whether the second electronic device is indoors or outdoors. Therefore, the positioning module, the map query module, and the indoor/outdoor detection module may determine, through collaboration, whether the vehicle is located in the underground parking lot. For example, when the determined location is in the target area and is indoors, it may be determined that the vehicle is located in the underground parking lot; otherwise, it is determined that the vehicle is not located in the underground parking lot. The vehicle start/stop detection module may be used to detect whether the vehicle is started or stopped (that is, parked). Optionally, the second electronic device may further include a service recommendation module that may be used to recommend a corresponding service to the user based on a status or a corresponding event of the user and/or the vehicle.

A manner of communication between the communication modules in the first electronic device and the second electronic device may be near-field communication, Bluetooth communication, Wi-Fi communication, or the like. This is not specifically limited in embodiments of this application.

Scenario 2: single-device scenario

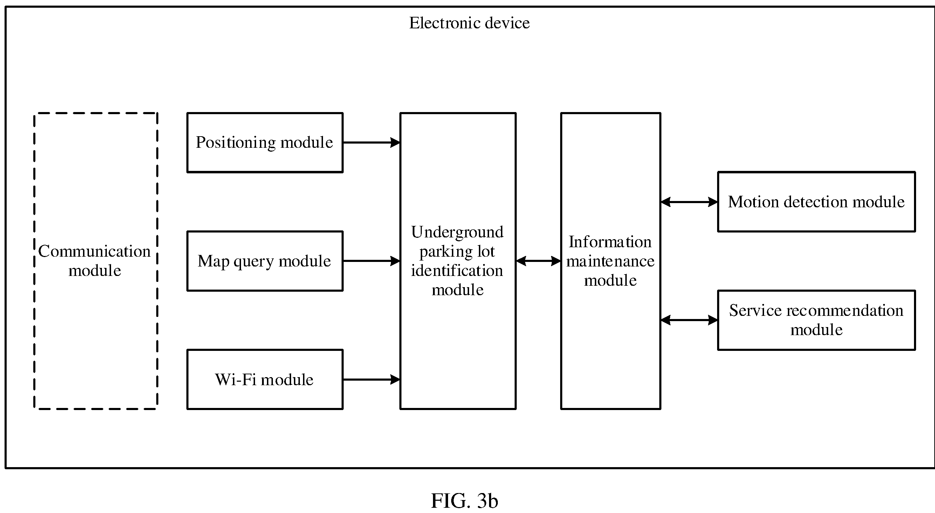

FIG. 3b is a diagram of an architecture of a detection system according to an embodiment of this application. The system may be deployed in a single electronic device, and the electronic device may be an electronic device carried by the user, for example, a mobile phone. As shown in FIG. 3b, the system may include a positioning module, a Wi-Fi module, an underground parking lot identification module, an information maintenance module, a map query module, a motion status detection module, a service recommendation module, and the like. Optionally, the system may further include a communication module and the like.

The positioning module is used to determine a location of the electronic device, and a positioning manner used by the positioning module may be network positioning or the like. The Wi-Fi module is used to detect a Wi-Fi fingerprint strength of the location of the electronic device, and may determine, based on the Wi-Fi fingerprint strength, whether the location of the electronic device is overground or underground. The map query module is used to query, based on the location determined by the positioning module and with reference to an obtained map, a POI near the location, and further determine whether the electronic device is located in a target area in which the underground parking lot may exist, to distinguish between the underground parking lot and another obstruction. For the target area, refer to the related descriptions in the foregoing Scenario 1. Details are not described herein again. The positioning module, the map query module, and the Wi-Fi module may determine, through collaboration, whether the user is located in the underground parking lot. For example, when the determined location is in the target area and it is determined, based on the Wi-Fi signal strength, that the user is located underground, it may be determined that the user is located in the underground parking lot; otherwise, it is determined that the user is not located in the underground parking lot, that is, the user is located out of the underground parking lot. The underground parking lot identification module is used to determine, based on processing results of the positioning module, the map query module, and the Wi-Fi module, whether the user is located in the underground parking lot, and may determine, with reference to parking context information maintained by the information maintenance module, that the user enters or leaves the underground parking lot. The information maintenance module is used to manage and save the parking context information. The parking context information includes information about a status and/or an event that the user and/or the vehicle are/is related to the underground parking lot. For the status and the event of the user and/or the vehicle, refer to the related descriptions in the foregoing Scenario 1. Details are not described herein again. The motion detection module is used to detect a vehicle riding status (riding the vehicle or not riding the vehicle) of the user, and further determine, based on the vehicle riding status of the user, whether the vehicle is started or stopped. For example, when it is determined that the user changes from riding the vehicle to not riding the vehicle, it may be determined that the vehicle is stopped. When it is determined that the user changes from not riding the vehicle to riding the vehicle, it may be determined that the vehicle is started. In conclusion, the positioning module, the Wi-Fi module, and the map query module may detect, through collaboration, whether the user is located in the underground parking lot. The motion detection module may detect whether the user rides the vehicle and whether the vehicle is started or stopped. The information maintenance module may determine previous status information of the user and/or the vehicle. The detection results of the positioning module, the Wi-Fi module, the map query module, and the motion detection module as well as the information maintained by the information maintenance module are integrated to obtain comprehensive status and event information of the user and the vehicle, and then a corresponding parking context is obtained and updated to the information maintenance module. The previous status information of the user and/or the vehicle indicates a status that is of the user and/or the vehicle and that is determined by the electronic device last time. The communication module may be used to communicate with another system or another electronic device. The service recommendation module is used to recommend a corresponding service to the user based on a status of the user and/or the vehicle.

For example, when the electronic device in the systems shown in FIG. 3a and FIG. 3b uses the software architecture shown in FIG. 2, functional modules in the electronic device may be deployed at the application framework layer shown in FIG. 2.

It should be noted that the system architectures shown in FIG. 3a and FIG. 3b are merely examples for describing a system architecture to which the solution in embodiments of this application is applicable, and do not limit the system architecture to which the solution in this application is applicable. Functional modules included in the systems shown in FIG. 3a and FIG. 3b are merely used as examples. The systems shown in FIG. 3a and FIG. 3b may alternatively include fewer or more functional modules. This is not specifically limited in this application.

The following specifically describes the solution provided in embodiments of this application by using an example in which a first electronic device is a mobile electronic device and a second electronic device is a vehicle-mounted electronic device. The vehicle-mounted electronic device collaborates with the mobile electronic device to detect a status and a corresponding event that a user and/or a vehicle are/is related to an underground parking lot.

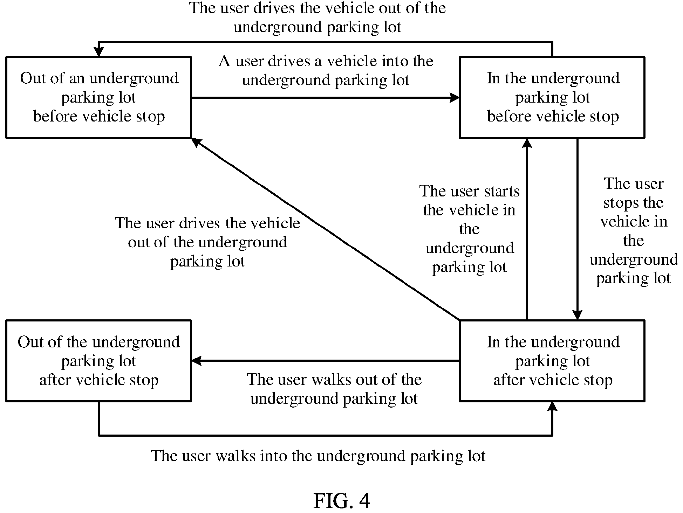

In some embodiments of this application, as shown in FIG. 4, the status that the user and/or the vehicle are/is related to the underground parking lot includes at least being located in the underground parking lot and being located out of the underground parking lot. Being located in the underground parking lot may be classified into being located in the underground parking lot before vehicle stop and being located in the underground parking lot after vehicle stop, and being located out of the underground parking lot may be classified into being located out of the underground parking lot before vehicle stop and being located out of the underground parking lot after vehicle stop. Events that cause a change or switching between different statuses may include: The user drives the vehicle into the underground parking lot, the user drives the vehicle out of the underground parking lot, the user walks into the underground parking lot, the user walks out of the underground parking lot, the user parks the vehicle in the underground parking lot, the user starts the vehicle in the underground parking lot, and so on. The vehicle-mounted electronic device and the mobile electronic device may detect and identify the foregoing status, event, and the like.

The vehicle-mounted electronic device may be used in events that the user drives the vehicle into the underground parking lot, the user drives the vehicle out of the underground parking lot, the user stops the vehicle in the underground parking lot, the user starts the vehicle in the underground parking lot, and so on, and may send detected event information to the mobile electronic device.

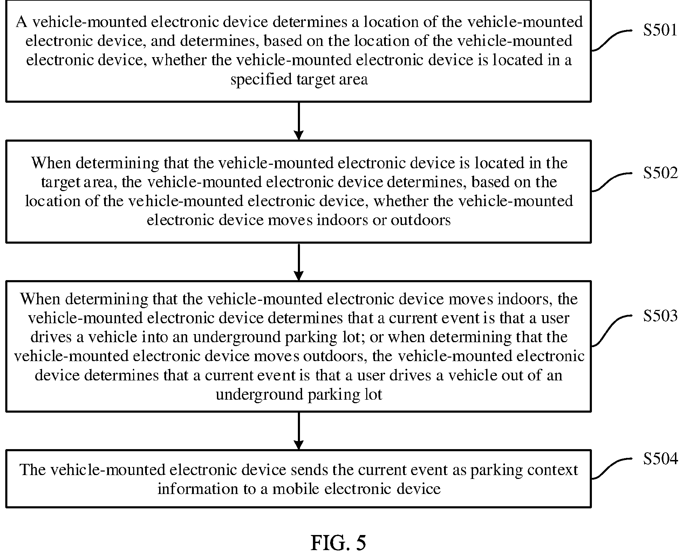

Refer to FIG. 5. A method performed by a vehicle-mounted electronic device to detect that a user drives the vehicle into or out of an underground parking lot may include the following steps.

S501: The vehicle-mounted electronic device determines a location of the vehicle-mounted electronic device, and determines, based on the location of the vehicle-mounted electronic device, whether the vehicle-mounted electronic device is located in a specified target area.

In an optional implementation, the vehicle-mounted electronic device may determine the location of the vehicle-mounted electronic device through satellite positioning. Optionally, the vehicle-mounted electronic device may periodically initiate satellite positioning to detect a current location of the vehicle-mounted electronic device.

In some embodiments of this application, the target area may be an area of a specified type, and the specified type may be a specified type of an area that may have an underground parking lot, for example, a shopping mall, an office building (or an office premise), or a residential area. Alternatively, the target area may be a specified specific area. For example, a specific area (such as a house or a company) that is frequently visited by the user and that has an underground parking lot may be specified as the target area. Alternatively, the target area may be an area manually set by the user.

In some embodiments of this application, after determining the location of the vehicle-mounted electronic device, the vehicle-mounted electronic device may obtain, in real time, a map including location information, and determine, based on a POI included in the map, whether the location of the vehicle-mounted electronic device is in the target area. Optionally, the location of the vehicle-mounted electronic device may be represented by longitude and latitude of satellite positioning. The vehicle-mounted electronic device may query a corresponding area on the map based on longitude and latitude data, and further determine, based on a POI in the map of the area, whether the target area exists in the area. If the target area exists, it may be determined, based on the location of the vehicle-mounted electronic device and a map of the target area, whether the location of the vehicle-mounted electronic device is in the target area. If the target area does not exist, it may be determined that the location of the vehicle-mounted electronic device is out of the target area. If determining that the POI includes the area of the specified type or the specified area, the vehicle-mounted electronic device may determine that the target area exists, and may determine the area of the specified type or the specified area as the target area; otherwise, the vehicle-mounted electronic device may determine that the target area does not exist. In this way, the vehicle-mounted electronic device may detect, in real time, whether the location of the vehicle-mounted electronic device is in the target area, and may further determine whether the vehicle-mounted electronic device enters the target area.

For example, in this step, the vehicle-mounted electronic device may be the second electronic device in the system shown in FIG. 3a. A step of determining the location of the vehicle-mounted electronic device by the vehicle-mounted electronic device may be completed by the positioning module in the second electronic device in the system shown in FIG. 3a. A step of determining, by the vehicle-mounted electronic device, whether the vehicle-mounted electronic device enters the specified target area may be completed by the map query module in the second electronic device in the system shown in FIG. 3a.

S502: When determining that the vehicle-mounted electronic device is located in the target area, the vehicle-mounted electronic device determines, based on the location of the vehicle-mounted electronic device, whether the vehicle-mounted electronic device moves indoors or outdoors.

In some embodiments of this application, the vehicle-mounted electronic device may perform indoor/-outdoor detection based on a quantity of satellites found through scanning in a satellite positioning process and a satellite signal strength, to determine whether the vehicle-mounted electronic device moves indoors or outdoors.

In an optional implementation, when the quantity of satellites found through scanning changes from being greater than a specified first quantity value to being lower than or equal to the first quantity value, and/or when the strength of the satellite signal found through scanning changes from being greater than a specified first strength value to being lower than or equal to the specified first strength value, the vehicle-mounted electronic device may determine that the vehicle-mounted electronic device moves indoors. When the quantity of satellites found through scanning changes from being lower than or equal to the first quantity value to being greater than the first quantity value, and/or when the strength of the satellite signal found through scanning changes from being lower than or equal to the first strength value to being greater than the first strength value, the vehicle-mounted electronic device may determine that the vehicle-mounted electronic device moves outdoors.

In another optional implementation, when a decrease in a quantity of satellites found through scanning compared with a quantity of satellites found through scanning last time is greater than or equal to a specified second quantity value, and/or when a decrease in a strength of a satellite signal found through scanning compared with a strength of a satellite signal found through scanning last time is greater than or equal to a specified second strength value, the vehicle-mounted electronic device may determine that the vehicle-mounted electronic device moves indoors. When an increase in the quantity of satellites found through scanning compared with the quantity of satellites found through scanning last time is greater than or equal to the specified second quantity value, and/or when an increase in the strength of the satellite signal found through scanning compared with the strength of the satellite signal found through scanning last time is greater than or equal to the specified second strength value, the vehicle-mounted electronic device may determine that the vehicle-mounted electronic device moves outdoors.

For example, a step of determining, by the vehicle-mounted electronic device, whether the vehicle-mounted electronic device moves indoors or outdoors may be completed by the indoor/outdoor detection module in the second electronic device in the system shown in FIG. 3a.

S503: When determining that the vehicle-mounted electronic device moves indoors, the vehicle-mounted electronic device determines that a current event is that the user drives the vehicle into the underground parking lot; or when determining that the vehicle-mounted electronic device moves outdoors, the vehicle-mounted electronic device determines that a current event is that the user drives the vehicle out of the underground parking lot.

In some embodiments of this application, when determining that the location of the vehicle-mounted electronic device is in the target area and determining that the location of the vehicle-mounted electronic device changes from being outdoors to being indoors, the vehicle-mounted electronic device determines that the vehicle-mounted electronic device moves indoors, and may determine that a current event is that the user drives the vehicle into the underground parking lot. When determining that a result of the current indoor/outdoor detection is that the vehicle-mounted electronic device is indoors and a result of previous indoor/outdoor detection is that the vehicle-mounted electronic device is outdoors, the vehicle-mounted electronic device determines that the location of the vehicle-mounted electronic device changes from being outdoors to being indoors. When determining that the location of the vehicle-mounted electronic device is in the target area and determining that the location of the vehicle-mounted electronic device changes from being indoors to being outdoors, the vehicle-mounted electronic device determines that the vehicle-mounted electronic device moves outdoors (goes outdoors), and may determine that a current event is that the user drives the vehicle out of the underground parking lot. When determining that a result of current indoor/outdoor detection is that the vehicle-mounted electronic device is outdoors and a result of previous indoor/outdoor detection is that the vehicle-mounted electronic device is indoors, the vehicle-mounted electronic device determines that the location of the vehicle-mounted electronic device changes from being indoors to being outdoors. In a process of performing indoor/outdoor detection, the vehicle-mounted electronic device may always save a result of latest detection.

In some embodiments of this application, the vehicle-mounted electronic device may also determine the status of the vehicle based on whether the vehicle is indoors and whether the vehicle is in the target area. The status of the vehicle is also a status of the user driving the vehicle. Specifically, when the vehicle-mounted electronic device determines the status of the vehicle, the following three cases may be included.

(1) When determining that the vehicle-mounted electronic device is currently indoors and a current location is in the target area, the vehicle-mounted electronic device may determine that the status of the vehicle is that the vehicle is located in the underground parking lot.

(2) When determining that the vehicle-mounted electronic device is currently outdoors and a current location is in the target area, the vehicle-mounted electronic device may determine that the status of the vehicle is that the vehicle is located out of the underground parking lot.

(3) When determining that the vehicle-mounted electronic device is currently not located in the target area (regardless of whether the vehicle is indoors), the vehicle-mounted electronic device may determine that the status of the vehicle is that the vehicle is located out of the underground parking lot. Optionally, in this case, the vehicle-mounted electronic device may continue to perform step S501.

For example, this step may be completed by the indoor/outdoor detection module in the second electronic device in the system shown in FIG. 3a, or certainly may be completed by another module (for example, another independent functional module).

S504: The vehicle-mounted electronic device sends the current event as parking context information to a mobile electronic device.

In some embodiments of this application, the vehicle-mounted electronic device may send the current event (the user drives the vehicle into the underground parking lot or the user drives the vehicle out of the underground parking lot) as the parking context information to the mobile electronic device, and may further send information such as time information corresponding to the current event and location information of the vehicle.

For example, this step may be completed by the communication module in the second electronic device in the system shown in FIG. 3a.

According to the foregoing method, the vehicle-mounted electronic device may identify, in combination with satellite positioning, map query, and indoor/outdoor identification, an event that the user drives the vehicle into or out of the underground parking lot. The occurred event is sent to the mobile electronic device, so that the mobile electronic device can accurately obtain event information related to the user and the vehicle in a timely manner. This facilitates the mobile electronic device to perform subsequent processing based on the event information, for example, actively providing a service to the user.

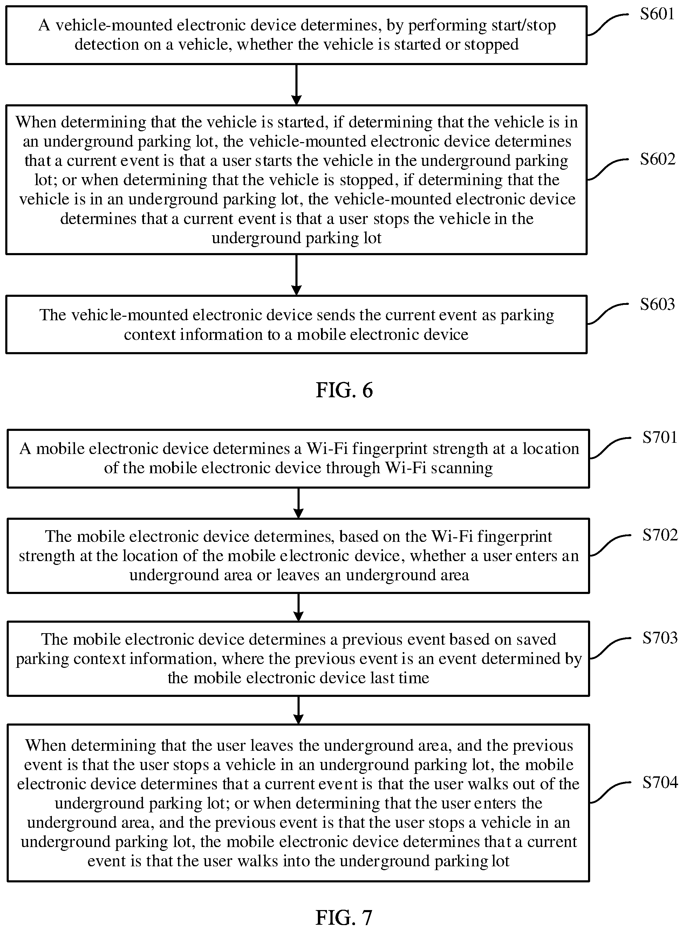

In some embodiments of this application, refer to FIG. 6. A method performed by a vehicle-mounted electronic device to detect that a user starts or stops a vehicle in an underground parking lot may include the following steps.

S601: The vehicle-mounted electronic device determines, by performing start/stop detection on the vehicle, whether the vehicle is started or stopped.

In some embodiments of this application, the vehicle-mounted electronic device may periodically perform start/stop detection on the vehicle, to determine whether the vehicle is started or stopped. Optionally, a cycle in which the vehicle-mounted electronic device performs start/stop detection on the vehicle may be the same as a cycle in which the vehicle initiates satellite positioning in the foregoing embodiment.

In some embodiments of this application, when performing start/stop detection on the vehicle, the vehicle-mounted electronic device may determine, based on a speed (a traveling speed), power-on/off, gear information, and the like of the vehicle, whether the vehicle is started or stopped. In an optional implementation, if detecting that the traveling speed of the vehicle is greater than or equal to a specified first speed threshold, the vehicle-mounted electronic device may determine that the vehicle is in a started state (including a running state after start). If detecting that the speed of the vehicle is lower than or equal to a specified second speed threshold, the vehicle-mounted electronic device may determine that the vehicle is in a stopped state. The first speed threshold is greater than or equal to the second speed threshold. In another optional implementation, if detecting that the speed of the vehicle is greater than or equal to a specified first speed threshold, the vehicle is in a power-on state, and a gear is a first specified gear, the vehicle-mounted electronic device may determine that the vehicle is in a started state. If detecting that the speed of the vehicle is lower than or equal to a specified second speed threshold, the vehicle is in a power-off state, and the gear is a second specified gear, the vehicle-mounted electronic device may determine that the vehicle is in a stopped state. The first specified gear may be a specified gear that may be used when the vehicle travels, and the second specified gear may be a specified gear that may be used when the vehicle is still. Certainly, the vehicle-mounted electronic device may identify vehicle start/stop in another manner by referring to another indicator. This is not specifically limited in embodiments of this application. According to the foregoing method, when detecting that the vehicle changes from the started state to the stopped state, the vehicle-mounted electronic device may determine that the vehicle is stopped. When detecting that the vehicle changes from the stopped state to the started state, the vehicle-mounted electronic device may determine that the vehicle is started.

For example, this step may be completed by the vehicle start/stop detection module in the second electronic device in the system shown in FIG. 3a.

S602: When determining that the vehicle is started, if determining that the vehicle is located in the underground parking lot, the vehicle-mounted electronic device determines that the current event is that the user starts the vehicle in the underground parking lot; or when determining that the vehicle is stopped, if determining that the vehicle is located in the underground parking lot, the vehicle-mounted electronic device determines that the current event is that the user stops the vehicle in the underground parking lot.

The vehicle-mounted electronic device may determine, based on the current status of the vehicle determined in the method shown in FIG. 5, whether the vehicle is located in the underground parking lot. Alternatively, the vehicle-mounted electronic device may determine the status of the vehicle in real time according to the method shown in FIG. 5, and further determine whether the vehicle is located in the underground parking lot.

For example, this step may be completed by the vehicle start/stop detection module in the second electronic device in the system shown in FIG. 3a.

S603: The vehicle-mounted electronic device sends the current event as parking context information to the mobile electronic device.

In some embodiments of this application, the vehicle-mounted electronic device may send a vehicle start event or a parking event as the parking context information to a mobile electronic device, and may send information such as time information corresponding to the event and location information of the vehicle, so that the mobile electronic device can determine the status of the user and the vehicle based on the vehicle start event or the stop event.

For example, this step may be completed by the communication module in the second electronic device in the system shown in FIG. 3a.

In some embodiments of this application, the vehicle-mounted electronic device may synchronously perform the methods shown in FIG. 5 and FIG. 6.

According to the method provided in the foregoing embodiment, the vehicle-mounted electronic device may determine events that the user drives the vehicle into or out of the underground parking lot (including that the user drives the vehicle into the underground parking lot or the user drives the vehicle out of the underground parking lot) and the user starts or stops the vehicle in the underground parking lot (including that the user parks the vehicle in the underground parking lot or the user starts the vehicle in the underground parking lot), and send a determined event as the parking context information to the mobile electronic device, so that the mobile electronic device can accurately sense, in a timely manner, a status and the event that the user and the vehicle are related to the underground parking lot.

In the methods shown in FIG. 5 and FIG. 6, each time after determining an occurred event, the vehicle-mounted electronic device may send the event as the parking context information to the mobile electronic device, so that the mobile electronic device can determine a status of the vehicle (and the user) based on the event. After receiving the parking context information from the vehicle-mounted electronic device for the first time, the mobile electronic device may update saved parking context information by using the parking context information. In this way, the parking context information, namely, event information, saved in the mobile electronic device is event information determined by the vehicle-mounted electronic device in a latest period from a historical moment to a current moment. In addition, the mobile electronic device may determine the status of the user and the vehicle based on the event indicated by the parking context information from the vehicle-mounted electronic device.

The mobile electronic device may determine, based on the parking context information sent by the vehicle-mounted electronic device, statuses or events that the vehicle is located in the underground parking lot, the vehicle is located out of the underground parking lot, the user drives the vehicle into the underground parking lot, the user drives the vehicle out of the underground parking lot, the user stops the vehicle in the underground parking lot, the user starts the vehicle in the underground parking lot, and so on. The mobile electronic device may further detect statuses or events that the user is located in the underground parking lot, the user is located out of the underground parking lot, the user walks out of the underground parking lot, the user walks into the underground parking lot, and so on.

In some embodiments of this application, the mobile electronic device may maintain a status machine configured to record the status of the user and/or the vehicle, a status change, and a corresponding event. The status machine includes a plurality of preset statuses and corresponding events that occur during switching between different statuses. The plurality of preset statuses may include a status that the user and the vehicle may be related to the underground parking lot.

For example, the status of the user and/or the vehicle maintained in the status machine may include the following statues shown in FIG. 4: being located out of the parking lot before vehicle stop, being located in the parking lot before vehicle stop, being located in the parking lot after vehicle stop, and the like. The status of the user may further include the following statuses: being located out of the parking lot after vehicle stop and the like. The event maintained in the status machine may include the following events shown in FIG. 4: The user drives the vehicle into the underground parking lot, the user drives the vehicle out of the underground parking lot, the user stops the vehicle in the underground parking lot, the user starts the vehicle in the underground parking lot, the user walks out of the underground parking lot, the user walks into the underground parking lot, and so on. As shown in FIG. 4, the status change of the user and/or the vehicle and the corresponding event may include the following cases:

(1) The status of the user and/or the vehicle changes from being located out of the underground parking lot before vehicle stop to being located in the underground parking lot before vehicle stop, and the corresponding event is that the user drives the vehicle into the underground parking lot.

(2) The status of the user and/or the vehicle changes from being located in the underground parking lot before vehicle stop to being located out of the underground parking lot before vehicle stop, and the corresponding event is that the user drives the vehicle out of the underground parking lot.

(3) The status of the user and/or the vehicle changes from being located in the underground parking lot before vehicle stop to being located in the underground parking lot after vehicle stop, and the corresponding event is that the user stops the vehicle in the underground parking lot.

(4) The status of the user and/or the vehicle changes from being located in the underground parking lot after vehicle stop to being located in the underground parking lot before vehicle stop, and the corresponding event is that the user starts the vehicle in the underground parking lot.

(5) The status of the user and/or the vehicle changes from being located in the underground parking lot after vehicle stop to being located out of the underground parking lot before vehicle stop, and the corresponding event is that the user drives the vehicle out of the underground parking lot.

(6) The status of the user changes from being located in the underground parking lot after vehicle stop to being located out of the underground parking lot after vehicle stop, and the corresponding event is that the user walks out of the underground parking lot.

(7) The status of the user changes from being located out of the underground parking lot after vehicle stop to being located in the underground parking lot after vehicle stop, and the corresponding event is that the user walks into the underground parking lot.

The mobile electronic device may determine a current status of the user and/or the vehicle based on the parking context information from the vehicle-mounted electronic device and previous status information saved in the mobile electronic device. The previous status information indicates a previous status. The previous status is a status of the user and/or the vehicle that is determined by the mobile electronic device last time. The parking context information from the vehicle-mounted electronic device indicates an occurred event, namely, a current event. The mobile electronic device may determine the current event based on the parking context information from the vehicle-mounted electronic device, may determine the previous status based on the saved previous status information, and may further determine the current status of the user and the vehicle based on the previous status and the current event.

In some embodiments of this application, when the mobile electronic device determines the current status based on the previous status and the current event, the following several cases may be included.

(1) When the previous status is that the user is located out of the underground parking lot before vehicle stop, and the current event is that the user drives the vehicle into the underground parking lot, the mobile electronic device may determine that the current status of the user and the vehicle is that the user and the vehicle are located in the underground parking lot before vehicle stop.

(2) When the previous status is that the user is located in the underground parking lot before vehicle stop, and the current event is that the user drives the vehicle out of the underground parking lot, the mobile electronic device may determine that the current status of the user and the vehicle is that the user and the vehicle are located out of the underground parking lot before vehicle stop.

(3) When the previous status is that the user is located in the underground parking lot before vehicle stop, and the current event is that the user stops the vehicle in the underground parking lot, the mobile electronic device may determine that the current status of the user and the vehicle is that the user and the vehicle are located in the underground parking lot after vehicle stop.

(4) When the previous status is that the user is located in the underground parking lot after vehicle stop, and the current event is that the user starts the vehicle in the underground parking lot, the mobile electronic device may determine that the current status of the user and the vehicle is that the user and the vehicle are located in the underground parking lot before vehicle stop.

(5) When the previous status is that the user is located in the underground parking lot after vehicle stop, and the current event is that the user drives the vehicle out of the underground parking lot, the mobile electronic device may determine that the current status of the user and the vehicle is that the user and the vehicle are located out of the underground parking lot before vehicle stop.

The mobile electronic device may perform corresponding detection and identification on an event that the user walks into or out of the underground parking lot and a corresponding status. Refer FIG. 7. A method performed by a mobile electronic device to detect an event that a user walks into or out of an underground parking lot may include the following steps.

S701: The mobile electronic device determines a Wi-Fi fingerprint strength at a location of the mobile electronic device through Wi-Fi scanning.

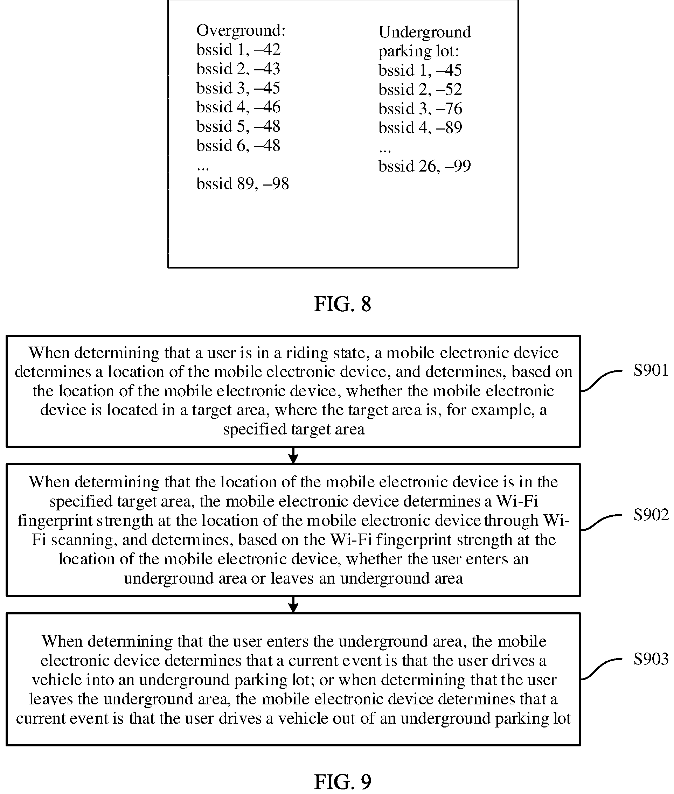

Generally, there are not a large quantity of Wi-Fi devices laid in an underground parking lot. Instead, there are a large quantity of Wi-Fi devices laid on the ground. Due to shielding of a building body, generally, in the underground parking lot, a signal from a Wi-Fi device on the ground cannot be received, or a signal received from a Wi-Fi device on the ground is very weak. Therefore, a quantity of Wi-Fi devices that may be found by Wi-Fi scanning in the underground parking lot is greatly different from a quantity of Wi-Fi devices that may be found by Wi-Fi scanning on the ground. Specifically, the quantity of Wi-Fi devices that may be found by Wi-Fi scanning in the underground parking lot is small, while the quantity of Wi-Fi devices that may be found by Wi-Fi scanning on the ground is large. The mobile electronic device may find a basic service set (basic service set, BSS) identifier (identifier, ID) of a Wi-Fi device through scanning, and determine existence of the Wi-Fi device based on the basic service set identifier (bssid). For example, as shown in FIG. 8, in a same location area, the mobile electronic device may find 89 Wi-Fi devices on the ground through scanning, namely, the Wi-Fi devices corresponding to a total of 89 identifiers bssid 1 to bssid 89 shown in FIG. 8. Signal strengths of these Wi-Fi devices are respectively -42, -43, -45, -46, -48, -48, ..., and -98 shown in FIG. 8. The mobile electronic device may find 26 Wi-Fi devices in the underground parking lot through scanning, namely, the Wi-Fi devices corresponding to a total of 26 identifiers bssid 1 to bssid 26 shown in FIG. 8. Signal strengths of these Wi-Fi devices are respectively -45, -52, -76, -89, ..., and -99 shown in FIG. 8. It can be learned by comparison that both a quantity and the Wi-Fi signal strengths of the Wi-Fi devices found by the mobile electronic device through scanning in the underground parking lot are lower than a quantity and the Wi-Fi signal strengths of the Wi-Fi devices found by the mobile electronic device through scanning on the ground. Therefore, based on this feature, the underground parking lot and an overground area can be distinguished, and then the underground parking lot can be identified.

Specifically, in this embodiment of this application, the underground parking lot and the overground area may be distinguished based on a Wi-Fi fingerprint strength. The mobile electronic device may determine, through Wi-Fi scanning, a quantity of Wi-Fi devices existing in an environment in which the mobile electronic device is located and a signal strength corresponding to each Wi-Fi device, and determine, based on the signal strength of each Wi-Fi device found through scanning, a final Wi-Fi fingerprint strength corresponding to a current location. The Wi-Fi signal strength of each Wi-Fi device found by the mobile electronic device through scanning contributes (non-negatively) to the Wi-Fi fingerprint strength. A higher Wi-Fi signal strength of the Wi-Fi device found by the mobile electronic device through scanning indicates a larger contribution of the Wi-Fi signal strength of the Wi-Fi device to the Wi-Fi fingerprint strength.

In an optional implementation, the mobile electronic device may determine the Wi-Fi fingerprint strength according to the following formula:

$$FSSI = \sum_{i=1}^{n} \max(RSSI_i - min, 0)$$

FSSI indicates the Wi-Fi fingerprint strength, $RSSI_i$ indicates a Wi-Fi signal strength of an $i^{th}$ Wi-Fi device found through scanning, i is a positive integer greater than zero and less than or equal to n, n indicates a quantity of Wi-Fi devices found by the mobile electronic device through scanning, and min is a specified value. The specified value may be used as a minimum Wi-Fi signal strength value that may be found by the mobile electronic device through scanning, and $\max(RSSI_i - min, 0)$ indicates to take a maximum value in $(RSSI_i - min)$ and 0.

In some embodiments of this application, the mobile electronic device may periodically perform Wi-Fi scanning and Wi-Fi fingerprint strength calculation. Optionally, a cycle in which the mobile electronic device performs Wi-Fi scanning may be the same as the cycle in which the vehicle-mounted electronic device performs start/stop detection on the vehicle and the cycle in which the vehicle-mounted electronic device initiates satellite positioning in the foregoing embodiment.

In some embodiments of this application, the mobile electronic device may alternatively initiate network positioning and Wi-Fi scanning and perform underground parking lot identification each time after a screen is turned on and unlocked, to properly reduce power consumption of the mobile electronic device.

For example, this step may be completed by the Wi-Fi module in the first electronic device in the system shown in FIG. 3a.

S702: The mobile electronic device determines, based on the Wi-Fi fingerprint strength at the location of the mobile electronic device, whether the user enters or leaves an underground area.

In some embodiments of this application, in an optional implementation, when the Wi-Fi fingerprint strength at the location of the mobile electronic device is lower than or equal to a specified fingerprint strength threshold, the mobile electronic device may determine that the mobile electronic device is located in the underground area. When the Wi-Fi fingerprint strength at the location of the mobile electronic device is greater than the specified fingerprint strength threshold, the mobile electronic device may determine that the mobile electronic device is located in an overground area. The fingerprint strength threshold may be specified based on data sampled offline in advance, or may be determined based on data sampled online in real time, and may be continuously updated based on data collected in real time. When determining that the user changes from being located in the underground area to being located in the overground area, the mobile electronic device may determine that the user leaves the underground area. When determining that the user changes from being located in the overground area to being located in the underground area, the mobile electronic device may determine that the user enters the underground area.

S703: The mobile electronic device determines a previous event based on saved parking context information, where the previous event is an event determined by the mobile electronic device last time.

The previous event may be an event indicated by the parking context information saved in the mobile electronic device, and the parking context information is parking context information last sent by the vehicle-mounted electronic device to the mobile electronic device.

For example, this step may be completed by the information maintenance module in the first electronic device in the system shown in FIG. 3a.

S704: When determining that the user leaves the underground area, and the previous event is that the user stops the vehicle in the underground parking lot, the mobile electronic device determines that a current event is that the user walks out of the underground parking lot; or when determining that the user enters the underground area, and the previous event is that the user stops the vehicle in the underground parking lot, the mobile electronic device determines that a current event is that the user walks into the underground parking lot.

In some embodiments of this application, after determining the current event (the user walks out of the underground parking lot or the user walks into the underground parking lot), the mobile electronic device may determine a previous status based on saved previous status information, and determine a current status of the user based on the previous status and the current event. The previous status information indicates the previous status, and the previous status is a status that is of the user and/or the vehicle and that is determined by the mobile electronic device last time.

When the mobile electronic device determines the current status of the user based on the previous status and the current event, the following two cases are included.

(1) When the previous status is that the user is located in the underground parking lot after vehicle stop, and the current event is that the user walks out of the underground parking lot, the mobile electronic device may determine that the current status of the user is that the user is located out of the underground parking lot after vehicle stop.

(2) When the previous status is that the user is located out of the underground parking lot after vehicle stop, and the current event is that the user walks into the underground parking lot, the mobile electronic device may determine that the current status of the user is that the user is located in the underground parking lot after vehicle stop.

In some embodiments of this application, the electronic device may alternatively identify, based on a riding status of the user and a location of the user and with reference to a change status of an overground/underground location of the user, an event that the user walks into or out of the underground parking lot. In this case, the foregoing steps S703 and S704 may be replaced with the following steps: The mobile electronic device determines that the user is in a non-riding state and is located in a specified target area. When determining that the user leaves the underground area, the mobile electronic device determines that a current event is that the user walks out of the underground parking lot. When determining that the user enters the underground area, the mobile electronic device determines that a current event is that the user walks into the underground parking lot.

According to the foregoing method, the mobile electronic device may detect an event that the user walks into or out of the underground parking lot and a status that the user is located out of the underground parking lot after vehicle stop, and may determine, based on information from the vehicle-mounted electronic device, an event that the user drives the vehicle into or out of the underground parking lot and a status of being located out of the underground parking lot before vehicle stop, being located in the underground parking lot before vehicle stop, being located in the underground parking lot after vehicle stop, and the like. Therefore, the mobile electronic device can determine all the statues and events shown in FIG. 4. As a result, the mobile electronic device can comprehensively identify statuses and events in processes in which the user enters and leaves the underground parking lot and changes between the statuses. In addition, the mobile electronic device collaborates with the vehicle-mounted electronic device to comprehensively and accurately detect and identify, in a timely manner, processes in which the user drives into the underground parking lot, the user stops the vehicle in the underground parking lot, the user walks out of the underground parking lot, the user walks into the underground parking lot, the user starts the vehicle in the underground parking lot, the user drives the vehicle out of the underground parking lot, and so on, without an additional hardware device. Therefore, the foregoing solution provided in embodiments of this application has high practicability.

The following specifically describes the solution provided in embodiments of this application by using an example in which the foregoing first electronic device is a mobile electronic device. The mobile electronic device may detect a status and a corresponding event that a user and/or a vehicle is related to an underground parking lot.

In some embodiments of this application, the status that the user and/or the vehicle are/is related to the underground parking lot may include the status shown in FIG. 4, and the event that causes switching between different statuses may include the event shown in FIG. 4. For details, refer to the foregoing related descriptions. Details are not described herein again.

The mobile electronic device may detect a status of the user, determine a status of the vehicle based on the status of the user, and determine a corresponding event based on switching between statuses of the user and the vehicle.

Refer to FIG. 9. A method performed by the mobile electronic device to detect that the user drives the vehicle into or out of the underground parking lot may include the following steps.

S901: When determining that the user is in a riding state, the mobile electronic device determines a location of the mobile electronic device, and determines, based on the location of the mobile electronic device, whether the mobile electronic device is located in a target area, where the target area is, for example, a specified target area.

The user may be a user carrying the mobile electronic device or a user to which the mobile electronic device belongs.

In some embodiments of this application, the mobile electronic device may determine, through motion status monitoring, whether the user is in the riding state, and determine a current location of the user when determining that the user is in the riding state. When determining that the user in a non-riding state, the mobile electronic device may not perform any subsequent processing.

In some embodiments of this application, the mobile electronic device may periodically perform motion status detection, to determine whether the user is in the riding state. Optionally, the mobile electronic device may detect a motion feature through a configured component like an accelerometer or a gyroscope, and determine, based on the motion feature, whether the user is in the riding state.

In some embodiments of this application, the mobile electronic device may determine the location of the mobile electronic device through network positioning. Optionally, the mobile electronic device may periodically initiate network positioning to detect a current location.

For the target area, refer to the related descriptions in the foregoing embodiment. For a method for determining, by the mobile electronic device, whether the location of the mobile electronic device is in the specified target area, refer to the method performed by the vehicle-mounted electronic device to determine whether the location of the mobile electronic device is in the specified target area in the foregoing embodiment. Details are not described herein again.

For example, in this step, the mobile electronic device may be the electronic device in the system shown in FIG. 3b. A step of determining the location of the mobile electronic device through network positioning may be completed by the positioning module in the electronic device in the system shown in FIG. 3b. A step of determining, by the mobile electronic device, whether the location is in the specified target area may be completed by the map query module in the electronic device in the system shown in FIG. 3b.

S902: When determining that the location of the mobile electronic device is in the specified target area, the mobile electronic device determines a Wi-Fi fingerprint strength at the location of the mobile electronic device through Wi-Fi scanning, and determines, based on the Wi-Fi fingerprint strength at the location of the mobile electronic device, whether the user enters an underground area or leaves an underground area.

For a method for determining the Wi-Fi fingerprint strength at the location by the mobile electronic device through Wi-Fi scanning, refer to the method used when the mobile electronic device determines the Wi-Fi fingerprint strength at the location through Wi-Fi scanning in the foregoing embodiment. Details are not described herein again. For a method for determining, by the mobile electronic device based on the Wi-Fi fingerprint strength at the location of the mobile electronic device, whether the user enters or leaves the underground area, refer to the method performed by the mobile electronic device to determine, based on the Wi-Fi fingerprint strength at the location of the mobile electronic device, whether the user enters or leaves the underground area in the foregoing embodiment. Details are not described herein again.

For example, this step may be completed by the Wi-Fi module in the electronic device in the system shown in FIG. 3b.

S903: When determining that the user enters the underground area, the mobile electronic device determines that a current event is that the user drives the vehicle into the underground parking lot; or when determining that the user leaves the underground area, the mobile electronic device determines that a current event is that the user drives the vehicle out of the underground parking lot.

In some embodiments of this application, the mobile electronic device may save the current event as parking context information, or update saved parking context information based on the current event, that is, use the current event as an event indicated by the updated parking context information. The context information indicates an event last determined by the mobile electronic device.

Optionally, when saving the current event as the parking context information, the mobile electronic device may save both time information corresponding to the current event and location information of the mobile electronic device.

In some embodiments of this application, the mobile electronic device may alternatively determine statuses of the user and the vehicle based on whether the user is in the riding state, whether the location of the user is in the target area, and whether the user is in the underground area. The status of the user is also a status of the vehicle driven by the user. Specifically, when the mobile electronic device determines the statuses of the user and the vehicle, the following three cases may be included.

(1) When determining that the user is in the riding state, the location of the user is in the target area, and the user is located in the underground area, the mobile electronic device may determine that the statuses of the user and the vehicle are that the user and the vehicle are in the underground parking lot.
(2) When determining that the user is in the riding state, the location of the user is in the target area, and the user is in an overground area, the mobile electronic device may determine that the statuses of the user and the vehicle are that the user and the vehicle are out of the underground parking lot.
(3) When determining that the vehicle-mounted electronic device is currently not located in the target area, the vehicle-mounted electronic device may determine that the status of the vehicle is that the vehicle is located out of the underground parking lot. Optionally, in this case, the vehicle-mounted electronic device may continue to perform step S901.

For example, this step may be completed by the underground parking lot identification module in the electronic device in the system shown in FIG. 3b.

According to the foregoing method, the mobile electronic device may detect, in combination with motion detection, network positioning, map query, and Wi-Fi identification, an event that the user drives the vehicle into or out of the underground parking lot. No additional hardware device is required to be deployed. Therefore, the foregoing method has high practicability.

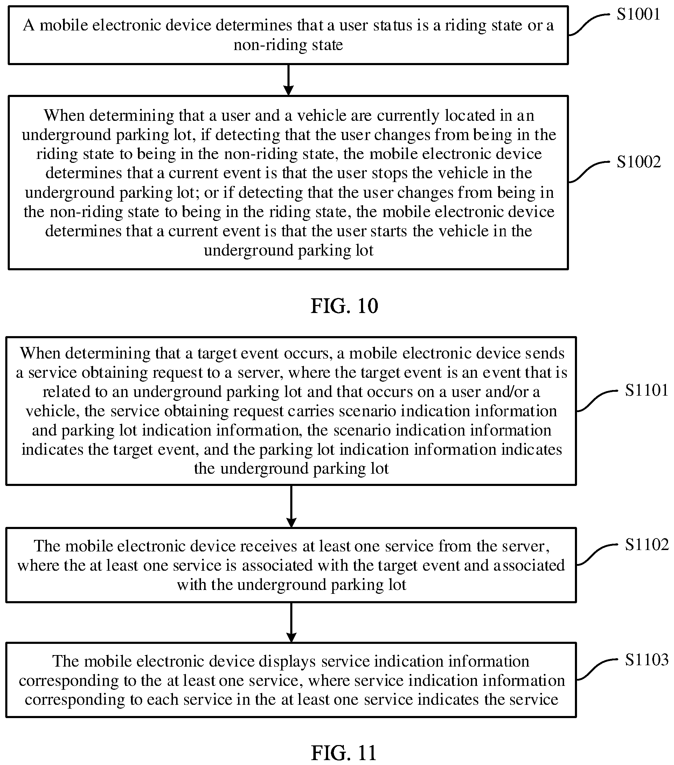

In some embodiments of this application, refer to FIG. 10. A method used by a mobile electronic device to detect that a user starts or stops a vehicle in an underground parking lot may include the following steps.

S1001: The mobile electronic device determines that a user status is a riding state or a non-riding state.

The user is a user carrying the mobile electronic device or a user to which the mobile electronic device belongs.

In some embodiments of this application, the mobile electronic device may determine the user status by performing motion status detection. Optionally, the mobile electronic device may periodically perform motion status detection, to determine whether the user is in the riding state. Optionally, a cycle in which the mobile electronic device performs motion status detection may be the same as the cycle in which the mobile electronic device initiates network positioning in the foregoing embodiment.

For example, this step may be completed by the motion status detection module in the electronic device in the system shown in FIG. 3b.

S1002: When determining that the user and the vehicle are currently located in the underground parking lot, if detecting that the user changes from being in the riding state to being in the non-riding state, the mobile electronic device determines that a current event is that the user stops the vehicle in the underground parking lot; or if detecting that the user changes from being in the non-riding state to being in the riding state, the mobile electronic device determines that a current event is that the user starts the vehicle in the underground parking lot.

The mobile electronic device may determine, according to the method in the foregoing embodiment, whether the user and the vehicle are located in the underground parking lot. Details are not described herein again.

For example, this step may be completed by the motion status detection module in the electronic device in the system shown in FIG. 3b.

In some embodiments of this application, with reference to the methods shown in FIG. 9 and FIG. 10, each time the mobile electronic device determines an occurred event, the mobile electronic device may save the event as parking context information, so that the mobile electronic device can determine a status of the vehicle (and the user) based on the event. In addition, a current status of the user and/or the vehicle may be determined based on a status indicated by the parking context information and a status determined by the mobile electronic device last time. The mobile electronic device may further detect statuses or events that the user is located in the underground parking lot, the user is located out of the underground parking lot, the user walks out of the underground parking lot, the user walks into the underground parking lot, and so on.

In some embodiments of this application, the mobile electronic device may maintain a status machine configured to record the status of the user and/or the vehicle, a status change, and a corresponding event. The status machine includes preset possible existence states of the user and the vehicle and corresponding events that occur during switching between different statuses. For details, refer to the statuses and the events shown in FIG. 4. Details are not described herein again. For a method for determining, by the mobile electronic device, the current status of the user and/or the vehicle based on a previous status indicated by the parking context information and the current event determined by the mobile electronic device, refer to the method performed by the mobile electronic device to determine the current status based on the previous status and the current event in the foregoing embodiment. Details are not described herein again. For details of a method for detecting, by the mobile electronic device, statuses or events that the user is located in the underground parking lot, the user is located out of the underground parking lot, the user walks out of the underground parking lot, the user walks into the underground parking lot, and so on, refer to the method shown in FIG. 7. Details are not described herein again.

According to the foregoing method, the mobile electronic device may detect an event that the user enters or leaves the underground parking lot, an event that the user starts or stops the vehicle in the underground parking lot, and a status that the user and/or the vehicle are/is located out of the underground parking lot before vehicle stop, in the underground parking lot before vehicle stop, in the underground parking lot after vehicle stop, out of the underground parking lot after vehicle stop, or the like. Therefore, the mobile electronic device may comprehensively and accurately detect and identify, in a timely manner, processes in which the user drives into the underground parking lot, the user stops the vehicle in the underground parking lot, the user walks out of the underground parking lot, the user walks into the underground parking lot, the user starts the vehicle in the underground parking lot, the user drives the vehicle out of the underground parking lot, and so on, without an additional hardware device. Therefore, the foregoing solution provided in embodiments of this application has high practicability.

Optionally, according to the foregoing embodiment, when identifying whether the user is located in or enters or leaves the underground parking lot, the mobile electronic device may perform identification with reference to an atmospheric pressure measurement result. Specifically, the mobile electronic device may measure a current atmospheric pressure when determining that a value of a change to Wi-Fi fingerprint strengths detected two consecutive times is greater than or equal to a specified first threshold, and compare the current atmospheric pressure with an atmospheric pressure measured last time. If a difference between atmospheric pressure values of the current atmospheric pressure and the atmospheric pressure measured last time is greater than or equal to a specified second threshold, and a time difference between a moment for measuring the current atmospheric pressure and a moment for measuring the atmospheric pressure measured last time is less than or equal to a specified third threshold, it is determined that a result of identifying, based on the Wi-Fi fingerprint strength, whether the user is located in or enters or leaves the underground parking lot is accurate, and subsequent processing may be performed based on the result; otherwise, it is determined that a result of identifying, based on the Wi-Fi fingerprint strength, whether the user is located in or enters the underground parking lot is inaccurate, the result may be discarded, and no subsequent processing is performed. In addition, whether the user and the vehicle are located in the underground parking lot may be re-identified.

In the method provided in the foregoing embodiment, the mobile electronic device side can accurately obtain, in a timely manner, information about an event like an event that the user drives the vehicle into or out of the underground parking lot, the user starts or stops the vehicle in the underground parking lot, or the user walks into or out of the underground parking lot, a status that the user and/or the vehicle are/is located in or out of the underground parking lot, and the like. Based on the information, the mobile electronic device may actively recommend a proper service to the user based on information such as an occurred event and different statuses of the user and the vehicle, thereby improving user experience.

Refer to FIG. 11, a method performed by a mobile electronic device to actively provide a service to a user may include the following steps.

S1101: When determining that a target event occurs, the mobile electronic device sends a service obtaining request to a server, where the target event is an event that is related to an underground parking lot and that occurs on the user and/or a vehicle, the service obtaining request carries scenario indication information and parking lot indication information, the scenario indication information indicates the target event, and the parking lot indication information indicates the underground parking lot.

The service obtaining request may be used to request to obtain a service corresponding to the target event and the parking lot.

For example, the target event may include the following events in the foregoing embodiments: The user drives the vehicle into the underground parking lot, the user drives the vehicle out of the underground parking lot, the user stops the vehicle in the underground parking lot, the user starts the vehicle in the underground parking lot, the user walks out of the underground parking lot, and the user walks into the underground parking lot. Certainly, another event that may result in a change to a status of the user and/or the vehicle may also be included. Optionally, the target event may be an event pre-configured by a system of the mobile electronic device or preset by a user.

For example, the parking lot indication information may be information that may uniquely identify the underground parking lot, such as a name, an ID, a location, or a POI ID of the underground parking lot.

In some embodiments of this application, before sending the service obtaining request to the server, the mobile electronic device may determine that the mobile electronic device is in a screen-on state.

The mobile electronic device is an electronic device carried by the user or an electronic device belonging to the user. For a method for determining, by the mobile electronic device, that the target event occurs, refer to the related descriptions in the foregoing embodiment. Details are not described herein again.

S1102: The mobile electronic device receives at least one service from the server, where the at least one service is associated with the target event and associated with the underground parking lot.

In some embodiments of this application, the server may save services associated with different underground parking lots, and association relationships (or correspondences) between different services in services associated with each underground parking lot and events. The services associated with each underground parking lot and the association relationship between different services and events may be pre-configured by the server or may be preset by the user.

For example, the services associated with the underground parking lot may include at least one of the following: a prompt service for turning on a vehicle lamp, a prompt service for belongings taking, a one-tap vehicle finding service for locating a vehicle, a one-tap payment service for making a payment, and a service for providing a recommended location near a current location, for example, a shopping guide service in a shopping mall. For example, the association relationships between different services and events may include: A service associated with the event that the user drives the vehicle into the underground parking lot may include the prompt service for turning on a vehicle lamp; a service associated with the event that the user stops the vehicle in the underground parking lot may include the belongings reminder service for belongings taking; a service associated with the event that the user walks into the underground parking lot may include the one-tap vehicle finding service for locating a vehicle, the one-tap payment service for making a payment, and the like; and a service associated with the event that the user walks out of the underground parking lot may include the service for providing a recommended location near a current location, for example, the shopping guide service in a shopping mall.

When the server receives the service obtaining request sent by the mobile electronic device, the server may determine, based on the parking lot indication information carried in the server request, an underground parking lot corresponding to a location of the mobile electronic device, and further determine services associated with the underground parking lot. The server may determine the target event based on the scenario indication information carried in the service obtaining request, select, from the services associated with the underground parking lot, the service associated with the target event, and further send the selected service to the mobile electronic device. In this case, the mobile electronic device receives the service that corresponds to the target event and that is selected by the server from the services corresponding to the underground parking lot. Therefore, the mobile electronic device may directly push the corresponding service.

In the foregoing process, both the service storage method and the service selection method are performed by the server, and the mobile electronic device only needs to request the service from the server and perform service recommendation. This can reduce processing difficulty and workload on a mobile electronic device side, and implement service recommendation on the mobile electronic device side.

Optionally, the server may be a cloud server.

S1103: The mobile electronic device displays service indication information corresponding to the at least one service, where service indication information corresponding to each service in the at least one service indicates the service.

The service indication information may be an icon of a service, other prompt information, or the like. The mobile electronic device may display the service indication information of the at least one service in a display window corresponding to an entire display, or in a floating window or a notification bar displayed on a display.

For example, if the mobile electronic device is displaying a home screen (namely, a home screen interface) when obtaining the at least one service, the mobile electronic device may display the service indication information of the at least one service in a service icon format, that is, the mobile electronic device may display a service icon of the at least one service on the home screen.

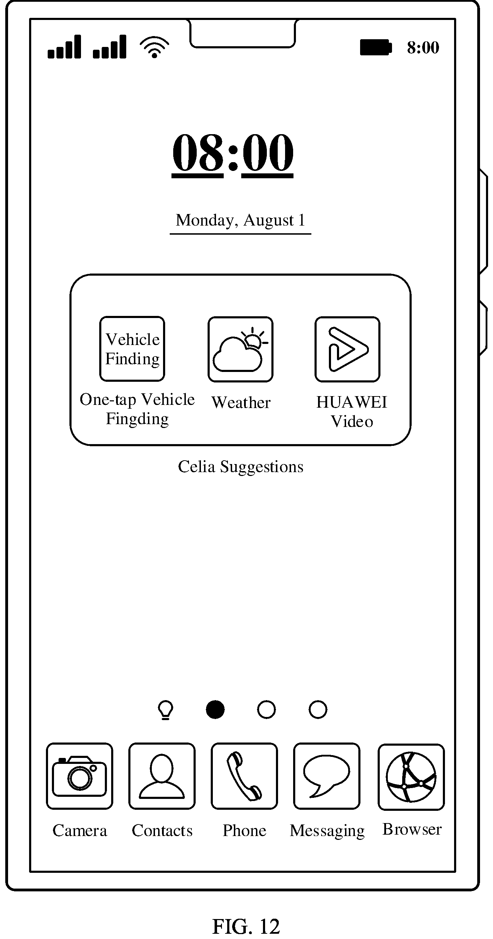

For example, when the mobile electronic detects the event that the user walks into the underground parking lot, and the mobile electronic device is displaying the home screen, the mobile electronic device may display an icon of the one-tap vehicle finding service shown in FIG. 12. When the user taps the icon, the mobile electronic device may further display a service interface of the one-tap vehicle finding service, so that the user can use the service to locate the vehicle.

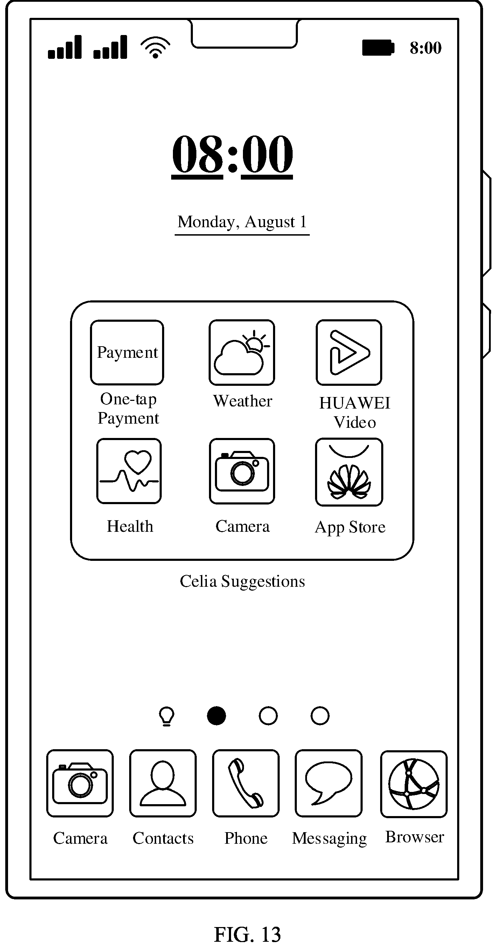

For another example, when the mobile electronic detects the event that the user walks into the underground parking lot, and the mobile electronic device is displaying the home screen, the mobile electronic device may display an icon of the one-tap payment service shown in FIG. 13. When the user taps the icon, the mobile electronic device may further display a service interface of the one-tap payment service, so that the user can perform a payment operation on the service interface.

Optionally, when the mobile electronic device receives a plurality of services from the server, the mobile electronic device may display icons of the plurality of services one by one, or may display icons of the plurality of services simultaneously. For example, in the foregoing example, the mobile electronic device may also simultaneously display the one-tap vehicle finding service and the one-tap payment service that are corresponding to the event that the user walks into the underground parking lot.

For example, if the mobile electronic device does not display the home screen when obtaining the at least one service, the mobile electronic device may display the service indication information of the at least one service in a notification message format, or may display the service indication information of the at least one service in a floating window.

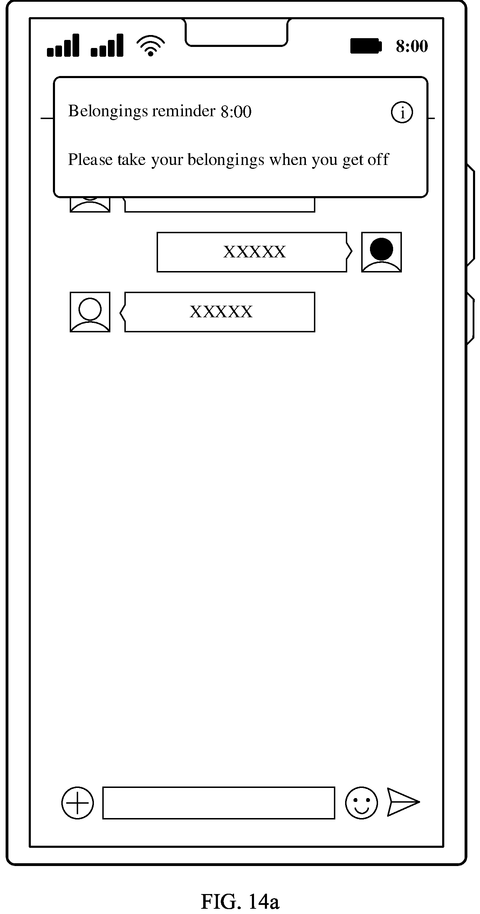

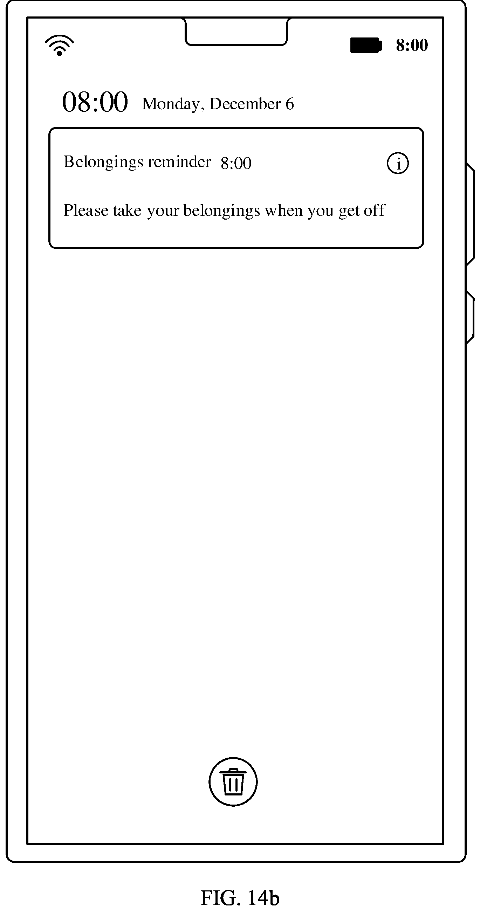

For example, when the mobile electronic device determines that an occurred event is that the user stops the vehicle in the underground parking lot, and the mobile electronic device is displaying a chat interface, the mobile electronic device may display a notification message of the belongings reminder service shown in FIG. 14a, to remind the user to carry belongings when getting off the vehicle. Alternatively, the mobile electronic device may display, in a notification bar shown in FIG. 14b, a notification message corresponding to the belongings reminder service. Optionally, when the user taps the notification message of the belongings reminder service, the mobile electronic device may further display a service interface of the belongings reminder service.

Optionally, after obtaining the at least one service from the server, the mobile electronic device may alternatively directly display service interfaces of the at least one service. In this case, the foregoing step S1103 may be replaced with the following step: The mobile electronic device displays the service interfaces corresponding to the at least one service. In an optional implementation, the mobile electronic device may sequentially display the service interfaces of the at least one service in a sequence in which the user uses the at least one service. For example, when the at least one service includes only the one-tap payment service, the mobile electronic device may directly display a service interface of the one-tap payment service. When the at least one service includes the one-tap vehicle finding service and the one-tap payment service, the mobile electronic device may first display a service interface of the one-tap vehicle finding service. Subsequently, after the user closes the interface, the mobile electronic device may continue to display an interface of the one-tap payment service. In another optional implementation, the mobile electronic device may separately display the service interfaces of the at least one service in at least one split-screen window or floating window. Optionally, in this manner, display areas of service interfaces of different services may be different.

In some embodiments of this application, the service obtained by the electronic device from the server may be a service integrating a plurality of functions. In this case, when a service interface is displayed, the plurality of functions integrated by the service may be provided on the service interface. For example, the one-tap vehicle finding service and the one-tap payment service may be integrated into a same service, and a service interface of the service displayed by the electronic device includes functions of one-tap vehicle finding and one-tap payment. The user may perform a one-tap vehicle finding operation and/or a one-tap payment operation on the interface.

For example, the foregoing method may be completed by a service recommendation module in the mobile electronic device.

According to the foregoing method, after detecting that an event that is related to the underground parking lot and that occurs on the user and/or the vehicle, the mobile electronic device may actively provide a recommended service based on the occurred event. This implements intelligent service recommendation. According to the method, the user does not need to manually search for a service. This can improve convenience and efficiency of using the service.

In some embodiments of this application, the correspondences between different services and events in the foregoing method may also be saved in the mobile electronic device, and the server is configured to save only the services corresponding to each underground parking lot in different underground parking lots. In this way, when entering the underground parking lot, the mobile electronic device can request, from the server, the service corresponding to the underground parking lot. After obtaining the service corresponding to the underground parking lot, when determining that the event related to the underground parking lot occurs on the user and/or the vehicle, the mobile electronic device may select the corresponding service based on the current event and recommend the service to the user.

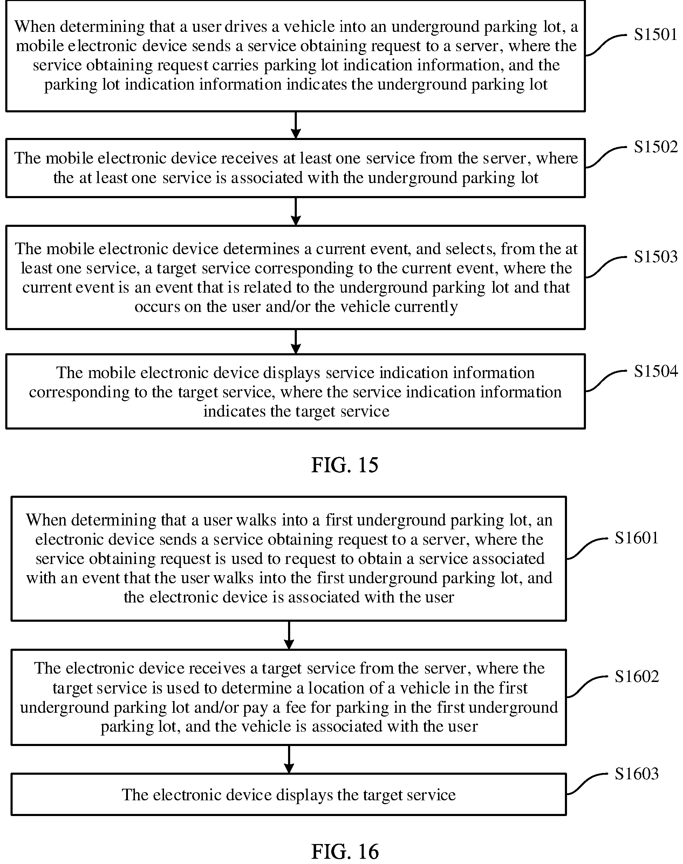

Refer to FIG. 15, a method performed by a mobile electronic device to actively provide a service to a user in the foregoing manner may include the following steps.

S1501: When determining that the user drives a vehicle into an underground parking lot, the mobile electronic device sends a service obtaining request to a server, where the service obtaining request carries parking lot indication information, and the parking lot indication information indicates the underground parking lot.

The service obtaining request may be used to request to obtain a service corresponding to the parking lot.

For example, the parking lot indication information may be information that may uniquely identify the underground parking lot, such as a name, an ID, a location, or a POI of the underground parking lot.

S1502: The mobile electronic device receives at least one service from the server, where the at least one service is associated with the underground parking lot.

After the mobile electronic device sends the service obtaining request to the server, the server may determine, based on the parking lot indication information carried in the service obtaining request, an underground parking lot corresponding to a location of the mobile electronic device, and send, to the mobile electronic device, at least one service correspondingly associated with the underground parking lot.

Optionally, after receiving the at least one service from the server, the mobile electronic device may cache or save the at least one service.

S1503: The mobile electronic device determines a current event, and selects, from the at least one service, a target service corresponding to the current event, where the current event is an event that is related to the underground parking lot and that occurs on the user and/or the vehicle currently.

In some embodiments of this application, the mobile electronic device may save association relationships between different services (or different types of services) and events. The association relationships may be pre-configured by the mobile electronic device or may be preset by the user.

After receiving the at least one service returned by the server, the mobile electronic device may select, from the at least one service based on the association relationships between different services and events, a service associated with the current event as the target service.

S1504: The mobile electronic device displays service indication information corresponding to the target service, where the service indication information indicates the target service.

The service indication information may be an icon of a service, other prompt information, or the like. The mobile electronic device may display the service indication information of the at least one service in a display window corresponding to an entire display, or in a floating window or a notification bar displayed on a display.

In the foregoing method, when determining that the user drives the vehicle into the underground parking lot, the mobile electronic device may obtain, from the server, the at least one service corresponding to the underground parking lot. Subsequently, when determining an occurred event, the mobile electronic device may determine, based on the saved association relationships between different services and events, a service corresponding to the event and recommend the service to the user. This can properly improve a processing speed, thereby improving user experience.

In some embodiments of this application, if the mobile electronic device saves the at least one service returned by the server, the mobile electronic device may delete the saved at least one service when determining that the user drives the vehicle out of the underground parking lot.

In some embodiments of this application, in the foregoing method, the server may save an association relationship between the underground parking lot and a service ID or an association relationship between an event and a service ID. After the mobile electronic device requests the service from the server, the server may also return the service ID of the at least one service to the mobile electronic device. After determining the service ID, the mobile electronic device may obtain, based on the service ID, the corresponding service from the server configured to save and manage the service, and may recommend the obtained service to the user.

In some embodiments of this application, in the foregoing method, after the mobile electronic device determines the service to be recommended to the user, if the mobile electronic device is currently in a screen-locked (or screen-off) state, the mobile electronic device may display, on a lock screen interface, the service indication information corresponding to the service. Optionally, the service indication information on the lock screen interface may be displayed in a format of a notification message. If the user taps the notification message, the mobile electronic device may prompt the user to unlock the display, and may directly display a service interface of the corresponding service after unlocking.

In some embodiments of this application, the mobile electronic device may alternatively fixedly display the service indication information of the service at a specified location, for example, a home screen or a leftmost screen. Optionally, for a same type of services corresponding to different underground parking lots, the mobile electronic device may display same service indication information.

When the user taps service indication information of any service, the mobile electronic device obtains, by performing the method corresponding to FIG. 11 or FIG. 15, the service associated with the underground parking lot in which the mobile electronic device is located, and displays a service interface of the service.

For example, the mobile electronic device may always display, on the leftmost screen, an icon of the one-tap vehicle finding service shown in FIG. 12. When the user taps the icon, after determining the underground parking lot in which the mobile electronic device is currently located, the mobile electronic device may obtain, from the server, the one-tap vehicle finding service associated with the underground parking lot, and displays a service interface of the one-tap vehicle finding service. According to the method, an effect of always displaying a same service icon and switching to different service interfaces based on different parking lots after the user taps the icon can be achieved, so that the user can enter service interfaces of a same type of services in different underground parking lots through a same entrance.

In some embodiments of this application, the methods corresponding to FIG. 11 and FIG. 15 may alternatively be performed by a vehicle-mounted electronic device or another electronic device, for example, may be performed by a service recommendation module in the vehicle-mounted electronic device, to achieve an effect of recommending a service on a vehicle-mounted electronic device side.

In some embodiments of this application, the methods corresponding to FIG. 11 and FIG. 15 may alternatively be completed by the mobile electronic device and a vehicle-mounted electronic device or another electronic device through collaboration.

For example, the foregoing step S1103 may be replaced with the following step: The mobile electronic device sends the at least one service to the vehicle-mounted electronic device, and indicates the vehicle-mounted electronic device to display the service indication information corresponding to the at least one service. The same applies to the foregoing step S1504.

It should be noted that the method procedures provided in the foregoing embodiments are merely examples for describing the method procedures applicable to embodiments of this application. The methods provided in the foregoing embodiments may be flexibly combined for performing. A performing sequence of the steps in the embodiments and a performing sequence of the methods in the embodiments during combined performing may be flexibly adjusted according to an actual requirement. Another step may be added, or some steps may be removed, and so on. This is not specifically limited in embodiments of this application.

Based on the foregoing embodiments and a same technical concept, an embodiment of this application further provides a service providing method. As shown in FIG. 16, the method includes the following steps.

S1601: When determining that a user walks into a first underground parking lot, an electronic device sends a service obtaining request to a server, where the service obtaining request is used to request to obtain a service associated with an event that the user walks into the first underground parking lot, and the electronic device is associated with the user.

For example, the electronic device may be the mobile electronic device described in the foregoing embodiment.

For a method for determining, by the electronic device, that the user enters the first underground parking lot, content included in the service obtaining request, and the like, refer to the related descriptions in the foregoing embodiment. Details are not described herein again.

S1602: The electronic device receives a target service from the server, where the target service is used to determine a location of a vehicle in the first underground parking lot and/or pay a fee for parking in the first underground parking lot, and the vehicle is associated with the user.

In some embodiments of this application, the target service may include a first service and/or a second service. The first service is used to determine the location of the vehicle in the first underground parking lot, and the second service is used to pay the fee for parking in the first underground parking lot.

For example, the first service may be the one-tap vehicle finding service in the foregoing embodiment, and the second service may be the one-tap payment service in the foregoing embodiment.

S1603: The electronic device displays the target service.

In some embodiments of this application, when the target service includes the first service and/or the second service, in an optional implementation, the electronic device may display first information that indicates the first service and/or second information that indicates the second service. When receiving a first operation performed on the first information, the electronic device may display a service interface of the first service in response to the first operation. When receiving a second operation performed on the second information, the electronic device may display a service interface of the second service in response to the second operation.

For example, the first information may be an icon of the first service, and the second information may be an icon of the second service. The first operation may be an operation of tapping the icon of the first service by the user, and the second operation may be an operation of tapping the icon of the second service by the user.

In some embodiments of this application, when the target service includes the first service and/or the second service, in another optional implementation, the electronic device may directly display the service interface of the first service and/or the second service. For a specific display method, refer to the related method for simultaneously displaying a plurality of services in the foregoing embodiment. Details are not described herein again.

For a method for displaying the first service and/or the second service by the electronic device, refer to the related descriptions in the foregoing embodiment. Details are not described herein again.

In the foregoing method, for specific steps performed by the electronic device, refer to the related descriptions in the foregoing embodiments. Details are not described herein again.

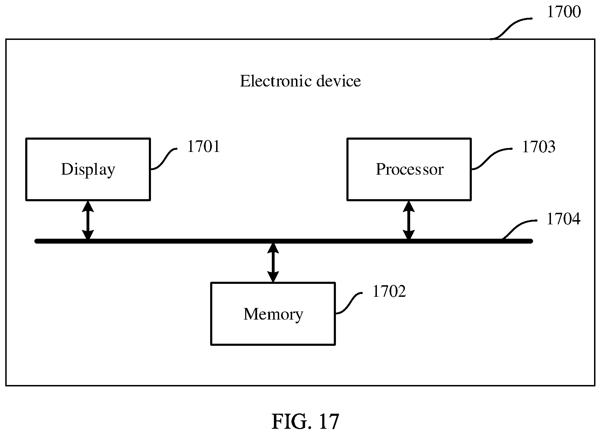

Based on the foregoing embodiments and a same technical concept, an embodiment of this application further provides an electronic device. The electronic device is configured to implement the service providing method provided in embodiments of this application. As shown in FIG. 17, the electronic device 1700 may include a display 1701, a memory 1702, one or more processors 1703, and one or more computer programs (not shown in the figure). The foregoing components may be coupled through one or more communication buses 1704.

The display 1701 is configured to display a related user interface, for example, a service interface.

The memory 1702 stores one or more computer programs (code), and the one or more computer programs include computer instructions. The one or more processors 1703 invoke the computer instructions stored in the memory 1702, so that the electronic device 1700 is enabled to perform the service providing method provided in embodiments of this application.

In a specific implementation, the memory 1702 may include a high-speed random-access memory, and may further include a non-volatile memory, for example, one or more magnetic disk storage devices, a flash device, or another non-volatile solid-state storage device. The memory 1702 may store an operating system (briefly referred to as a system below), for example, an embedded operating system, for example, Android, iOS, Windows, or Linux. The memory 1702 may be configured to store an implementation program in embodiments of this application. The memory 1702 may further store a network communication program. The network communication program may be used to communicate with one or more additional devices, one or more pieces of user equipment, or one or more network devices.

The one or more processors 1703 may be a general-purpose central processing unit (Central Processing Unit, CPU), a microprocessor, an application-specific integrated circuit (Application-Specific Integrated Circuit, ASIC), or one or more integrated circuits configured to control execution of programs of the solutions of this application.

It should be noted that FIG. 17 is merely an implementation of the electronic device 1700 provided in embodiments of this application. During actual application, the electronic device 1700 may further include more or fewer components. This is not limited herein.

Based on the foregoing embodiments and a same concept, an embodiment of this application further provides a computer-readable storage medium. The computer-readable storage medium stores a computer program. When the computer program is run on a computer, the computer is enabled to perform the method provided in the foregoing embodiments.

Based on the foregoing embodiments and a same concept, an embodiment of this application further provides a computer program product. The computer program product includes a computer program or instructions. When the computer program or the instructions is/are run on a computer, the computer is enabled to perform the method provided in the foregoing embodiments.

All or some of the methods in embodiments of this application may be implemented by using software, hardware, firmware, or any combination thereof. When software is used to implement the embodiments, all or some of the embodiments may be implemented in a form of computer program product. The computer program product includes one or more computer instructions. When the computer program instructions are loaded and executed on the computer, the process or functions according to embodiments of the present invention are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A service providing method, applied to an electronic device, wherein the method comprises:

   when determining that a user walks into a first underground parking lot, sending a service obtaining request to a server, wherein the service obtaining request is used to request to obtain a service associated with an event that the user walks into the first underground parking lot, and the electronic device is associated with the user; receiving a target service from the server, wherein the target service is used to determine a location of a vehicle in the first underground parking lot and/or pay a fee for parking in the first underground parking lot, and the vehicle is associated with the user; and displaying the target service.

2. The method according to claim 1, wherein

the service obtaining request carries first scenario indication information and parking lot indication information, wherein the first scenario indication information indicates an event that the user walks into an underground parking lot, and the parking lot indication information indicates the first underground parking lot; or

the service obtaining request carries second scenario indication information, wherein the second scenario indication information indicates the event that the user walks into the first underground parking lot.

3. The method according to claim 1 or 2, wherein the displaying the target service comprises:

displaying service indication information that indicates the target service; or
displaying a service interface of the target service.

4. The method according to claim 3, wherein after the displaying service indication information that indicates the target service, the method further comprises:
in response to an operation performed on the service indication information, displaying the service interface of the target service.

5. The method according to claim 1 or 2, wherein the target service comprises a first service and/or a second service, wherein the first service is used to determine the location of the vehicle in the first underground parking lot, and the second service is used to pay the fee for parking in the first underground parking lot; and
the displaying the target service comprises:

displaying first information that indicates the first service and/or second information that indicates the second service; or
displaying a display interface of the first service and/or the second service.

6. The method according to claim 5, wherein after the displaying first information that indicates the first service and/or second information that indicates the second service, the method further comprises:

in response to a first operation performed on the first information, displaying a service interface of the first service; and/or
in response to a second operation performed on the second information, displaying a service interface of the second service.

7. The method according to any one of claims 1 to 6, wherein the determining that a user walks into a first underground parking lot comprises:

determining a previous event;
detecting whether the electronic device is located in an overground area or an underground area; and
when determining that the electronic device changes from being located in the overground area to being located in the underground area, and the previous event is that the user walks out of the first underground parking lot, determining that the user walks into the first underground parking lot.

8. The method according to any one of claims 1 to 6, wherein the determining that a user walks into a first underground parking lot comprises:

when determining that the user is in a non-riding state and is located in a specified target area, detecting whether the electronic device is located in an overground area or an underground area, wherein the target area comprises the first underground parking lot; and
when determining that the electronic device changes from being located in the overground area to being located in the underground area, determining that the user walks into the first underground parking lot.

9. The method according to claim 7 or 8, wherein the detecting whether the electronic device is located in an overground area or an underground area comprises:

determining a wireless fidelity Wi-Fi fingerprint strength at a location of the electronic device, wherein the Wi-Fi fingerprint strength indicates a Wi-Fi signal strength at the location of the electronic device, and the Wi-Fi fingerprint strength is positively correlated to the Wi-Fi signal strength at the location of the electronic device; and
determining, based on the Wi-Fi fingerprint strength at the location of the electronic device, whether the electronic device is located in the overground area or the underground area.

10. The method according to claim 9, wherein the determining, based on the Wi-Fi fingerprint strength at the location of the electronic device, whether the electronic device is located in the overground area or the underground area comprises:

when the Wi-Fi fingerprint strength is greater than a specified strength threshold, determining that the electronic device is located in the overground area; or

when the Wi-Fi fingerprint strength is less than or equal to a specified strength threshold, determining that the electronic device is located in the underground area.

11. The method according to claim 9 or 10, wherein the determining a wireless fidelity Wi-Fi fingerprint strength at a location of the electronic device comprises:

> detecting a Wi-Fi signal strength of at least one Wi-Fi device existing in an environment in which the electronic device is located;
> determining a reference Wi-Fi signal strength corresponding to the at least one Wi-Fi device, wherein a reference Wi-Fi signal strength corresponding to any Wi-Fi device is a maximum value in a first parameter value and a second parameter value, the first parameter value is a difference between a Wi-Fi signal strength of the Wi-Fi device and a specified signal strength value, the second parameter value is a zero value, and the specified signal strength value is used as a minimum Wi-Fi signal strength value in the environment in which the electronic device is located; and
> summing up the reference Wi-Fi signal strength corresponding to the at least one Wi-Fi device to obtain the Wi-Fi fingerprint strength.

12. An electronic device, wherein the electronic device comprises a memory and one or more processors, wherein
the memory is configured to store computer program code, the computer program code comprises computer instructions, and when the computer instructions are executed by the one or more processors, the electronic device is enabled to perform the method according to any one of claims 1 to 11.

13. A computer-readable storage medium, wherein the computer-readable storage medium stores a computer program, and when the computer program is run on an electronic device, the electronic device is enabled to perform the method according to any one of claims 1 to 11.

14. A computer program product, wherein the computer program product comprises a computer program or instructions, and when the computer program or the instructions are run on a computer, the computer is enabled to perform the method according to any one of claims 1 to 11.

**Electronic device 100**

Antenna 1                    Antenna 2

150                          160

180

| Mobile communication module 2G/3G/4G/5G | Wireless communication module BT/WLAN/GNSS/NFC/IR/FM |

170

170A — Loudspeaker

170B — Receiver

170C — Microphone

170D — Headset jack

Audio module

194 — Displays 1 to N

193 — Cameras 1 to N

192 — Indicator

191 — Motor

190 — Button

121 — Internal memory

195 — SIM card interfaces 1 to N

120 — External memory interface

110

Processor

Sensor module

Pressure sensor

Gyroscope sensor

Barometric pressure sensor

Magnetic sensor

Acceleration sensor

Distance sensor

Optical proximity sensor

Fingerprint sensor

Temperature sensor

Touch sensor

Ambient light sensor

Bone conduction sensor

130 — USB interface

140

Charging input

Charging management module

Power management module — 141

Battery — 142

FIG. 1

| Application layer | Camera | Calendar | Music | Messaging |
|---|---|---|---|---|
| | Gallery | Bluetooth | Video | ... |

| Application framework layer | Window manager | Resource manager | Content provider | ... |
|---|---|---|---|---|
| | Notification manager | View system | Phone manager | |

| System library | Surface manager | Three-dimensional graphics processing library | Android runtime |
|---|---|---|---|
| | Two-dimensional graphics engine | Media library | Image processing library |  ... |

| Kernel layer | Keyboard driver | Camera driver | Display driver |
|---|---|---|---|
| | Wi-Fi driver | Bluetooth driver | Audio driver |

FIG. 2

EP 4 518 294 A1

First electronic device

Positioning module

Map query module

Wi-Fi module

Underground parking lot identification module

Communication module

Information maintenance module

Service recommendation module

Second electronic device

Communication module

Positioning module

Map query module

Indoor/Outdoor detection module

Vehicle start/stop detection module

Service recommendation module

FIG. 3a

EP 4 518 294 A1

Electronic device

Communication module

Positioning module → Underground parking lot identification module ↔ Information maintenance module ↔ Motion detection module

Map query module →

Wi-Fi module →

Information maintenance module ↔ Service recommendation module

FIG. 3b

The user drives the vehicle out of the
underground parking lot

| | A user drives a vehicle into the<br>underground parking lot | |
|---|---|---|
| Out of an underground<br>parking lot<br>before vehicle stop | | In the underground<br>parking lot<br>before vehicle stop |

The user drives the vehicle
out of the underground
parking lot

The user starts
the vehicle in
the
underground
parking lot

The user
stops the
vehicle in
the
underground
parking lot

| Out of the underground<br>parking lot<br>after vehicle stop | The user walks out of the<br>underground parking lot | In the underground<br>parking lot<br>after vehicle stop |
|---|---|---|

The user walks into the underground parking lot

FIG. 4

| A vehicle-mounted electronic device determines a location of the vehicle-mounted electronic device, and determines, based on the location of the vehicle-mounted electronic device, whether the vehicle-mounted electronic device is located in a specified target area | S501 |

| When determining that the vehicle-mounted electronic device is located in the target area, the vehicle-mounted electronic device determines, based on the location of the vehicle-mounted electronic device, whether the vehicle-mounted electronic device moves indoors or outdoors | S502 |

| When determining that the vehicle-mounted electronic device moves indoors, the vehicle-mounted electronic device determines that a current event is that a user drives a vehicle into an underground parking lot; or when determining that the vehicle-mounted electronic device moves outdoors, the vehicle-mounted electronic device determines that a current event is that a user drives a vehicle out of an underground parking lot | S503 |

| The vehicle-mounted electronic device sends the current event as parking context information to a mobile electronic device | S504 |

FIG. 5

A vehicle-mounted electronic device determines, by performing start/stop detection on a vehicle, whether the vehicle is started or stopped — S601

When determining that the vehicle is started, if determining that the vehicle is in an underground parking lot, the vehicle-mounted electronic device determines that a current event is that a user starts the vehicle in the underground parking lot; or when determining that the vehicle is stopped, if determining that the vehicle is in an underground parking lot, the vehicle-mounted electronic device determines that a current event is that a user stops the vehicle in the underground parking lot — S602

The vehicle-mounted electronic device sends the current event as parking context information to a mobile electronic device — S603

FIG. 6

A mobile electronic device determines a Wi-Fi fingerprint strength at a location of the mobile electronic device through Wi-Fi scanning — S701

The mobile electronic device determines, based on the Wi-Fi fingerprint strength at the location of the mobile electronic device, whether a user enters an underground area or leaves an underground area — S702

The mobile electronic device determines a previous event based on saved parking context information, where the previous event is an event determined by the mobile electronic device last time — S703

When determining that the user leaves the underground area, and the previous event is that the user stops a vehicle in an underground parking lot, the mobile electronic device determines that a current event is that the user walks out of the underground parking lot; or when determining that the user enters the underground area, and the previous event is that the user stops a vehicle in an underground parking lot, the mobile electronic device determines that a current event is that the user walks into the underground parking lot — S704

FIG. 7

```
Overground:              Underground
bssid 1, –42             parking lot:
bssid 2, –43             bssid 1, –45
bssid 3, –45             bssid 2, –52
bssid 4, –46             bssid 3, –76
bssid 5, –48             bssid 4, –89
bssid 6, –48
                         ...
...                      bssid 26, –99
bssid 89, –98
```

## FIG. 8

When determining that a user is in a riding state, a mobile electronic device determines a location of the mobile electronic device, and determines, based on the location of the mobile electronic device, whether the mobile electronic device is located in a target area, where the target area is, for example, a specified target area — S901

When determining that the location of the mobile electronic device is in the specified target area, the mobile electronic device determines a Wi-Fi fingerprint strength at the location of the mobile electronic device through Wi-Fi scanning, and determines, based on the Wi-Fi fingerprint strength at the location of the mobile electronic device, whether the user enters an underground area or leaves an underground area — S902

When determining that the user enters the underground area, the mobile electronic device determines that a current event is that the user drives a vehicle into an underground parking lot; or when determining that the user leaves the underground area, the mobile electronic device determines that a current event is that the user drives a vehicle out of an underground parking lot — S903

## FIG. 9

A mobile electronic device determines that a user status is a riding state or a non-riding state — S1001

When determining that a user and a vehicle are currently located in an underground parking lot, if detecting that the user changes from being in the riding state to being in the non-riding state, the mobile electronic device determines that a current event is that the user stops the vehicle in the underground parking lot; or if detecting that the user changes from being in the non-riding state to being in the riding state, the mobile electronic device determines that a current event is that the user starts the vehicle in the underground parking lot — S1002

FIG. 10

When determining that a target event occurs, a mobile electronic device sends a service obtaining request to a server, where the target event is an event that is related to an underground parking lot and that occurs on a user and/or a vehicle, the service obtaining request carries scenario indication information and parking lot indication information, the scenario indication information indicates the target event, and the parking lot indication information indicates the underground parking lot — S1101

The mobile electronic device receives at least one service from the server, where the at least one service is associated with the target event and associated with the underground parking lot — S1102

The mobile electronic device displays service indication information corresponding to the at least one service, where service indication information corresponding to each service in the at least one service indicates the service — S1103

FIG. 11

FIG. 12

**FIG. 13**

FIG. 14a

FIG. 14b

When determining that a user drives a vehicle into an underground parking lot, a mobile electronic device sends a service obtaining request to a server, where the service obtaining request carries parking lot indication information, and the parking lot indication information indicates the underground parking lot

S1501

The mobile electronic device receives at least one service from the server, where the at least one service is associated with the underground parking lot

S1502

The mobile electronic device determines a current event, and selects, from the at least one service, a target service corresponding to the current event, where the current event is an event that is related to the underground parking lot and that occurs on the user and/or the vehicle currently

S1503

The mobile electronic device displays service indication information corresponding to the target service, where the service indication information indicates the target service

S1504

FIG. 15

When determining that a user walks into a first underground parking lot, an electronic device sends a service obtaining request to a server, where the service obtaining request is used to request to obtain a service associated with an event that the user walks into the first underground parking lot, and the electronic device is associated with the user

S1601

The electronic device receives a target service from the server, where the target service is used to determine a location of a vehicle in the first underground parking lot and/or pay a fee for parking in the first underground parking lot, and the vehicle is associated with the user

S1602

The electronic device displays the target service

S1603

FIG. 16

1700

Electronic device

Display 1701

Processor 1703

1704

Memory 1702

FIG. 17

## INTERNATIONAL SEARCH REPORT

International application No.

**PCT/CN2023/118897**

**A. CLASSIFICATION OF SUBJECT MATTER**

H04L 67/51(2022.01)i

According to International Patent Classification (IPC) or to both national classification and IPC

**B. FIELDS SEARCHED**

Minimum documentation searched (classification system followed by classification symbols)

IPC:H04L67/-

Documentation searched other than minimum documentation to the extent that such documents are included in the fields searched

Electronic data base consulted during the international search (name of data base and, where practicable, search terms used)

CNABS; CNTXT; CNKI; 万方; WANFANG; 百度学术; BAIDU SCHOLAR: 行走, 步行, 走路, 走入, 走进, 停车场, 位置, 费, 支付, 寻车 VEN; WOTXT; EPTXT; USTXT; IEEE: walk+, park+, position, fee, pay+, car+, search+.

**C. DOCUMENTS CONSIDERED TO BE RELEVANT**

| Category* | Citation of document, with indication, where appropriate, of the relevant passages | Relevant to claim No. |
|---|---|---|
| X | CN 105788349 A (LENOVO (BEIJING) CO., LTD.) 20 July 2016 (2016-07-20) description, paragraphs [0096]-[0121] | 1-14 |
| A | CN 106295680 A (SHENZHEN YUNZHI YOUBO TECHNOLOGY CO., LTD.) 04 January 2017 (2017-01-04) entire document | 1-14 |
| A | CN 113963567 A (BEIJING YONGXIN TECHNOLOGY CO., LTD.) 21 January 2022 (2022-01-21) entire document | 1-14 |
| A | JP 2005004407 A (FUJITSU TEN LTD.) 06 January 2005 (2005-01-06) entire document | 1-14 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 December 2023** | **19 December 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/118897**

| Patent document cited in search report | | | Publication date (day/month/year) | Patent family member(s) | | | Publication date (day/month/year) |
|---|---|---|---|---|---|---|---|
| CN | 105788349 | A | 20 July 2016 | None | | | |
| CN | 106295680 | A | 04 January 2017 | None | | | |
| CN | 113963567 | A | 21 January 2022 | None | | | |
| JP | 2005004407 | A | 06 January 2005 | JP | 4115888 | B2 | 09 July 2008 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211194300